# EUROPÄISCHE PATENTSCHRIFT

(11) **EP 1 920 958 B1**
(45) Veröffentlichungstag und Bekanntmachung des Hinweises auf die Patenterteilung: **21.04.2010**
(21) Anmeldenummer: 07021236.0
(22) Anmeldetag: 31.10.2007
(51) Int. Cl.: B60J 5/04

(54) **Transportbehälter mit einer Vorrichtung zum Überführen einer Wand des Transportbehälters zwischen einer Schließstellung und einer Offenstellung**
Transport container with a device for moving the wall of the transport container from a closed position to an open position
Récipient de transport avec un dispositif de transfert d'une paroi du récipient de transport entre une position fermée et une position ouverte

(30) Priorität: 07.11.2006 DE 102006053523
(43) Veröffentlichungstag der Anmeldung: 14.05.2008
(73) Patentinhaber: Orten, Robert Erich, 54470 Bernkastel-Kues (DE)
(72) Erfinder: Schmiederer, Hermann, 77815 Bühl (DE)
(74) Vertreter: Geitz Truckenmüller Lucht

(56) Entgegenhaltungen:
- EP-A- 1 364 822
- EP-A- 1 516 763
- DE-A1- 4 237 473
- DE-A1- 4 411 578
- DE-A1-102004 031 202
- DE-U1- 9 108 949
- US-B1- 6 247 747

## Beschreibung

Die Erfindung betrifft eine Vorrichtung zum Überführen einer vorzugsweise einflügeligen, insbesondere einteiligen Wand eines Transportbehälters, beispielsweise einer Bordwand eines Fahrzeugaufbaus, insbesondere eines Kastenaufbaus, vorzugsweise eines Nutzfahrzeuges, oder eines Containers, von einer Schließstellung in eine Öffnungsstellung, und umgekehrt.

Es sind viele Transportbehälter bzw. Fahrzeugaufbauten oder Container bekannt geworden, die viele verschiedene Vorrichtungen zum Verschwenken der Seiten- bzw. Bordwände von einer den Laderaum begrenzenden Schließstellung in eine den Zugang zum Laderaum oder das Be- und/oder Entladen des Laderaumes ermöglichende Offenstellung, und umgekehrt, aufweisen.

Darunter gibt es Transportbehälter bzw. Aufbauten oder Stützanordnungen, bei denen eine einflügelig und einteilig sowie mittels der Schwenkvorrichtung nach oben über das Dach bzw. die Oberwand schwenkbare Wand in ihrer Schließstellung die Ladeöffnung bzw. den Laderaum zwischen dem Dach bzw. der Oberwand und dem Boden bzw. der Unterwand begrenzend abschließt. Derartige Vorrichtungen sind beispielsweise aus der DE 32 33 669 A1 der DE 100 15 545 A1 oder der WO 2006/079137 A1 bekannt geworden. Bei all diesen Vorrichtungen ist die einflügelige und einteilige Wand über wenigstens zwei Lenkerarme, und zwar über einen Oberlenker und eine Unterlenker, an einem vertikalen Wandteil oder an einem Stützaufbau angelenkt, wobei diese beiden Lenkerarme an der zu verschwenkenden Wand im Bereich deren in Schließstellung oberen und unteren Enden in einem Abstand zueinander angelenkt sind. Der in Schließstellung der Wand im Bereich deren unteren Endes angeordnete Unterlenker kann über einen an diesem und an der Vertikalwand bzw. der Stützkonstruktion angelenkten Hydraulikzylinder um seine an der Vertikalwand bzw. der Stützkonstruktion angelenkte Drehachse nach oben und unten verschwenkt werden, so dass auf diese Weise die zu verschwenkende Wand von ihrer Schließstellung in ihre Offenstellung, und umgekehrt, verschwenkt werden kann. Dabei ist jedoch konstruktionsbedingt eine erhebliche Beanspruchung des Raumes, in welchen die zu verschwenkende Wand beim Verschwenken von ihrer Schließstellung in ihre Offenstellung geschwenkt wird, unvermeidbar. Ferner sind diese Konstruktionen aufwändig.

Außer diesen Konstruktionen gibt es eine große Vielzahl von Transportbehältern bzw. Aufbauten oder Stützorganen, bei denen zwei separate Wände zum Verschließen einer einzigen Laderaumöffnung des Laderaumes in Form einer nach oben schwenkbaren Hubwand bzw. Oberwand und einer nach unten klappbaren Unterwand vorgesehen sind, die über ein Zwangsgetriebe, beispielsweise in Form von Lenkern, Seilen und/oder Ketten derart miteinander gekoppelt sind, dass das Hochschwenken der Oberwand durch ein Nachuntenklappen der Unterwand bewirkt wird, und umgekehrt.

Derartige Konstruktionen sind beispielsweise aus der DE 83 37 090 A1, der DE 40 06 532 A1 und der DE 31 21 690 A1 sowie der DE 103 43 915 A1 bekannt geworden. Das Dokument DE 10 343 915 A1 offenbart einen Transportbehälter mit den Merkmalen der Oberbegriffe der unabhängigen Ansprüche. Bei den beiden erstgenannten Konstruktionen ist die Oberwand ebenfalls über zwei Lenkerarme, und zwar wiederum über einen Oberlenker und einen Unterlenker, an einer Vertikalwand oder an einem Stützaufbau angelenkt. Bei den beiden letztgenannten Konstruktionen ist die Hub- bzw. Oberwand nur über einen Lenker an dem Fahrzeugaufbau angelenkt, der im Bereich des in Schließstellung oberen Endes an der Oberwand angelenkt ist. Die Hub- bzw. Oberwand liegt beim Verschwenken von ihrer Schließstellung in ihre Offenstellung, und umgekehrt, auf einer an der Dachkante vorgesehenen Umlenkrolle an, wo sie über ein die Oberwand mit der Unterwand verbindendes Zugseil angedrückt gehalten wird, welches die Zwangskopplung zwischen diesen beiden separaten Wandteilen bzw. Wänden bewirkt. Auch diese Konstruktionen sind aufwändig. Außerdem weisen diese konstruktionsbedingt erhebliche Nachteile beim Beladen und Entladen auf, wegen der damit einhergehenden Gefahr von Beschädigungen, beispielsweise durch Staplerfahrzeuge.

Zum Zwecke einer Maximierung des Laderaumes bei gleichbleibender Höhe der Aufbauten ist es bekannt geworden, die Reifenquerschnitte der Fahrzeuge zu verkleinern, wodurch das Fahrgestell abgesenkt werden kann, wodurch wiederum die Laderaumhöhe entsprechend zunimmt. Um dabei das Aufstehen der Unterwände auf dem Boden zu vermeiden, müssen die Unterwände immer kleiner werden, also eine immer kleinere Höhe aufweisen. Dies erschwert zunehmend die Bedienung bzw. Betätigung der Schwenkwände. Alternativ kann das Fahrgestell zum Zwecke des Beladens angehoben werden. Dies ist aufwändig

Aus den vorstehend genannten Gründen hat man andere Klappwandkonstruktionen entwickelt, bei denen keine Unterwände mehr verwendet werden, sondern bei denen eine mehrflügelige, klappbare Oberwand eingesetzt wird. Derartige Konstruktionen sind beispielsweise aus der BE 71 90 07 A, der DE 28 07 652 A, der FR 27 10 019 A oder der EP 0 738 649 A2 bekannt geworden. Bei diesen Konstruktionen ist jedoch die Oberwand ebenfalls über wenigstens zwei Lenker, und zwar wiederum über einen Oberlenker und einen Unterlenker, an einer Vertikalwand oder an einem Stützaufbau angelenkt. Auch diese Konstruktionen sind aufwändig und teuer. Abgesehen davon sind solche mehrflügeligen Wände instabil, was mit erheblichen Problemen bei der Ladungssicherung verbunden sein kann.

Es ist eine Aufgabe der Erfindung, eine Vorrichtung zum Überführen einer vorzugsweise einflügeligen, insbesondere einteiligen Wand eines Transportbehälters bzw. Aufbaus bzw. Containers zwischen einer Schließstellung und einer Offenstellung zur Verfügung zu stellen, die einfach und kostengünstig herstellbar ist und deren Konstruktion einfach, robust und kompakt gestaltbar ist und/oder die eine Möglichkeit für eine isolierte Fertigung des Transportbehälters bzw. Aufbaus bzw. Containers bietet, und/oder die den Raum, insbesondere den Verkehrsraum seitlich des Transportbehälters bzw. des Aufbaus bzw. des Containers möglichst wenig beansprucht und/oder die eine große Durchladehöhe und -breite ermöglicht und/oder die in der Schließstellung der Wand eine nur geringe Bauhöhe beansprucht und/oder die einen störungsfreien Einsatz auch bei ungünstigen Witterungsverhältnissen ermöglicht und/oder die vorteilhafte Möglichkeiten für eine Unterbringung der Wand vorzugsweise ohne Beanspruchung des Laderaums und vorzugsweise ohne seitlichen Überstand bietet.

Diese Aufgabe wird in überraschend einfacher Art und Weise durch eine Vorrichtung mit den Merkmalen der Ansprüche 1 und 12 gelöst.

Wenn die zu verschwenkende Wand auf der Anlagefläche frei abhebbar anliegt, also beim Hochschwenken lose über den Dachbereich gezogen werden kann, kann die Wand auch im Winter, wenn auf dem Dach eine Schneedecke von mehreren Zentimetern, beispielsweise von 30 Zentimetern, Schnee liegt, die Seitenwand trotzdem ohne Beeinträchtigung der Funktion geöffnet und auch wieder verschlossen werden. Denn dann kann die Wand einfach über die Schneedecke bewegt werden. Mit anderen Worten würde die Wand dann unter Umständen nicht mehr über die Anlagefläche des Transportbehälters selbst bewegt werden, sondern würde mit ihrer Innenseite über den ebenfalls eine Anlagefläche ausbildenden Schnee.

In vorteilhafter Ausgestaltung kann vorgesehen sein, dass der erste Lenker und/oder der Linearantrieb über einen oder mit einem Mechanismus und/oder Antrieb derart gekoppelt ist bzw. sind, dass der erste Lenker alleine mithilfe des an ihm angelenkten Linearantriebes um mehr als 150 Grad, vorzugsweise um mehr als 160 Grad, insbesondere um wenigstens 170 bis 180 Grad um seine erste Schwenkachse verschwenkbar ist. Dies ermöglicht es, die Wand vollständig nach oben über das Dach bzw. die Oberwand zu schwenken, und zwar vorzugsweise ohne einen seitlichen Überstand.

Zu diesem Zwecke kann ferner vorgesehen sein, dass die Wand und/oder der erste Lenker zumindest in einer Zwischenstellung zwischen der Öffnungsstellung und der Schließstellung der Wand über eine obere Dachkante des Daches bzw. über eine obere Kante der Oberwand nach oben hinausragt.

Ferner kann vorgesehen sein, dass die erste Schwenkachse des ersten Lenkers bezüglich dessen Längsachse außermittig angeordnet ist. Dadurch lassen sich verbesserte Verschwenk-und Hebelverhältnisse erreichen.

Gemäß der Erfindung ist vorgesehen, dass an dem Betätigungsteil des Linearantriebes ein zweiter Lenker um eine erste Schwenkachse verschwenkbar angelenkt ist, der um eine beabstandet zu seiner ersten Schwenkachse angeordnete zweite Schwenkachse verschwenkbar an dem ersten Lenker beabstandet zu dessen ersten Schwenkachse angelenkt ist, wobei der Linearantrieb an seinem Betätigungsteil und/oder der zweite Lenker einen vorzugsweise separaten Roll- und/oder Gleitkörper aufweist bzw. aufweisen, der beim Verschwenken der Wand mithilfe des Linearantriebes von ihrer Schließstellung in ihre Öffnungsstellung, gegebenenfalls auch umgekehrt, entlang einer im Dachbereich des Transportbehälters angeordneten, vorzugsweise nach oben aufragenden, Steuerkurvenfläche eines Stütz- und Führungskörpers bewegt wird, wobei sich der erste Lenker beim Verschwenken der Wand von ihrer Schließstellung in ihre Öffnungsstellung, gegebenenfalls auch umgekehrt, über den Roll- und/oder Gleitkörper an der Steuerkurvenfläche des Stütz- und Führungskörpers abstützt.

Durch diese noch immer vergleichsweise einfache und robuste Konstruktion wird in Verbindung mit der Möglichkeit eines Verschwenkens des ersten Lenkers um mehr als 150 Grad, vorzugsweise um mehr als 160 Grad, insbesondere um wenigstens 170 bis 180 Grad um seine erste Schwenkachse und einer damit einhergehenden Möglichkeit, die Wand vollständig, vorzugsweise ohne seitlichen Überstand, über das Dach bzw. die Oberwand zu verschwenken, in der Schließstellung der Wand nur eine minimale Bauhöhe beansprucht, bei einer maximalen Durchladehöhe und -breite. Bei einer Betätigung des Linearantriebes beschreibt also die erste Schwenkachse des zweiten Lenkers eine der Form bzw. Gestalt der Steuerfläche entsprechende Bahn, wodurch der erste Lenker um seine erste Schwenkachse und folglich die Bordwand von ihrer Schließstellung in ihre Offenstellung, gegebenenfalls auch umgekehrt, verschwenkt wird, und zwar in Verbindung mit der Möglichkeit von im Wesentlichen gleichbleibenden bzw. gleichbleibend guten Hebelarmverhältnissen.

Dabei kann vorgesehen sein, dass die Steuerkurvenfläche sich bis oberhalb der Schwenkachse des Linearantriebs, vorzugsweise auch bis oberhalb der ersten Schwenkachse des ersten Lenkers, erstreckt. Dies ermöglicht günstige Hebelverhältnisse in Verbindung mit einem einfachen und kontrollierten Überwinden des Totpunktes.

Ferner kann vorgesehen sein, dass die Steuerkurvenfläche in einer gedachten Vertikalebene senkrecht zu der ersten Schwenkachse des ersten Lenkers nach oben gewölbt gestaltet ist.

Außerdem kann vorgesehen sein, dass der Stütz- und Führungskörper eine die Steuerkurvenfläche enthaltende schiefe Ebene aufweist. Dies ermöglicht günstige Kraft- und Momentenverhältnisse bei einfachen und kostengünstigen Fertigungsmöglichkeiten.

Ferner kann vorgesehen sein, dass der Stütz- und Führungskörper in einer gedachten Vertikalebene senkrecht zu der ersten Schwenkachse des ersten Lenkers einen von der Steuerkurvenfläche nach oben begrenzten U-, V-, C- oder L-förmig gestalteten Querschnitt aufweist.

Außerdem oder zusätzlich kann vorgesehen sein, dass der Stütz- und Führungskörper in einer gedachten Vertikalebene senkrecht zu der ersten Schwenkachse des ersten Lenkers einen von der Steuerkurvenfläche zumindest teilweise nach oben begrenzten buckel- oder trapezförmigen Querschnitt aufweist.

Gemäß einer weiteren Ausgestaltung kann ferner vorgesehen sein, dass der, vorzugsweise als Steuerkörper bzw. Steuerbolzen gestaltete, Roll- und/oder Gleitkörper beim Verschwenken der Wand in bzw. an einer die Steuerkurvenfläche enthaltenden Kulissenführung des Stütz- und Führungskörpers geführt ist. Dadurch kann eine vorteilhafte und sichere Führung beim Verschwenken der Wand von ihrer Schließstellung in ihre Öffnungsstellung, und umgekehrt, erreicht werden.

Gemäß einer besonders bevorzugten Ausgestaltung kann vorgesehen sein, dass der Abstand einer die erste Schwenkachse und die zweite Schwenkachse des zweiten Lenkers enthaltenden gedachten Geraden in einer senkrecht zu diesen parallelen Schwenkachsen ausgebildeten gedachten Ebene von der parallel zu diesen Schwenkachsen ausgebildeten ersten Schwenkachse des ersten Lenkers, mit Ausnahme des beim Verschwenken der Wand im gesamten Verschwenkbereich, in welchem der Roll- und/oder Gleitkörper an der Steuerkurvenfläche anliegt, auftretenden maximalen Abstandes der Abstände der Geraden von der ersten Schwenkachse des ersten Lenkers, stets größer ist als die Hälfte, vorzugsweise zwei Drittel, insbesondere vier Fünftel des maximalen Abstandes der Abstände bzw. des jeweiligen Abstandes. Dadurch lassen sich entsprechend gleichbleibende bzw. gleichbleibend gute Kraft- und Hebelarmverhältnisse beim bzw. zum Verschwenken der Wand mithilfe des Linearantriebes schaffen. Dies kann auch dadurch erreicht oder verbessert werden, dass die Abstände der ersten Schwenkachse des ersten Lenkers von der zweiten Schwenkachse des zweiten Lenkers und deren Abstand zu der ersten Schwenkachse des zweiten Lenkers, in Verbindung mit der Neigung bzw. dem Neigungswinkel des Stütz- und Führungskörpers entsprechend aufeinander abgestimmt gestaltet sind.

Weiter verbesserte Verschwenk- und Hebelverhältnisse können insbesondere bei dem vorstehend erwähnten Ausführungsbeispiel, bei dem ein Roll- und/oder Gleitkörper beim Verschwenken der Wand mithilfe des Linearantriebes von ihrer Schließstellung in ihre Öffnungsstellung entlang einer im Dachbereich des Transportbehälters nach oben aufragenden Steuerkurvenfläche eines Stütz- und Führungskörpers bewegt wird, dadurch erreicht werden, dass die erste Schwenkachse des ersten Lenkers bezüglich dessen Längsachse derart außermittig angeordnet ist, dass sie in der Schließstellung der Wand unterhalb der Längsachse des ersten Lenkers angeordnet ist.

Gemäß einer besonders bevorzugten alternativen Ausgestaltung kann vorgesehen sein, dass an dem Betätigungsteil des Linearantriebes um eine erste Schwenkachse verschwenkbar ein zweiter Lenker angelenkt ist, der um eine beabstandet zu der ersten Schwenkachse des ersten Lenkers angeordnete weitere Schwenkachse verschwenkbar im Dachbereich des Transportbehälters an diesem angelenkt ist, und der mit dem ersten Lenker über ein Gelenk gekoppelt ist, das sowohl ein Verschwenken als auch ein Verschieben des zweiten Lenkers relativ zu dem ersten Lenker ermöglicht.

Dadurch kann erreicht werden, dass beim Verschwenken der Wand mit Hilfe des Linearantriebes von ihrer Schließstellung in ihres Öffnungsstellung, ggf. auch umgekehrt, der zweite Lenker relativ zu dem ersten Lenker, zumindest in einem Teilschwenkbereich, sowohl verschwenkt als auch verschoben wird, wobei sich der erste Lenker über das Gelenk an dem zweiten Lenker abstützt.

Durch diese Maßnahmen kann eine einfache und besonders robuste Konstruktion erreicht werden, wiederum in Verbindung mit der Möglichkeit eines Verschwenkens des ersten Lenkers um mehr als 150 Grad, vorzugsweise um mehr als 160 Grad, insbesondere um wenigstens 170 bis 180 Grad um seine erste Schwenkachse und einer damit einhergehenden Möglichkeit, die Wand vollständig, vorzugsweise ohne seitlichen Überstand, über das Dach bzw. die Oberwand zu verschwenken. Auch diese Konstruktion beansprucht in der Schließstellung der Wand nur eine vergleichsweise sehr geringe Bauhöhe und ermöglicht eine maximale Durchladehöhe und -breite. Bei einer Betätigung des Linearantriebes wird der zweite Lenker um seine weitere Schwenkachse verschwenkt und zugleich relativ zu dem ersten Lenker verschoben, und zwar in Verbindung mit der Möglichkeit von im Wesentlichen gleichbleibenden bzw. gleichbleibend guten Hebelarmverhältnissen.

Dabei kann vorgesehen sein, dass das Gelenk eine Schwenkachse umfasst, die beabstandet zu der weiteren Schwenkachse des zweiten Lenkers, vorzugsweise auch beabstandet zu der ersten Schwenkachse des zweiten Lenkers, angeordnet ist. Dadurch lassen sich weiter verbesserte Hebelarmverhältnisse erreichen.

Ferner kann vorgesehen sein dass das Gelenk wenigstens einen, vorzugsweise separaten, um eine bzw. die Schwenkachse verschwenkbaren Roll- und/oder Gleitkörper und einen wenigstens eine Führungsfläche und/oder wenigstens eine Steuerkurvenfläche aufweisenden Stütz- und Führungskörper für den wenigstens einen Roll- und/oder Gleitkörper umfasst. Der erste Lenker kann sich dabei vorteilhaft über den Roll- und/oder Gleitkörper an dem zweiten Lenker abstützen. Diese Maßnahmen ermöglichen einen reibungs- und verschleißarmen und einen über lange Zeit störungsfreien Betrieb bei günstigen Hebelarmverhältnissen.

Gemäß einer bevorzugten Weiterbildung kann vorgesehen sein, dass der Roll- und/oder Gleitkörper an dem zweiten Lenker befestigt bzw. angelenkt ist oder einen Teil des zweiten Lenkers ausbildet und dass der Stütz- und Führungskörper an dem ersten Lenker befestigt ist oder einen Teil des ersten Lenkers ausbildet.

Alternativ kann jedoch auch vorgesehen sein, dass der Roll-und/oder Gleitkörper an dem ersten Lenker befestigt bzw. angelenkt ist oder einen Teil des ersten Lenkers ausbildet und dass der Stütz- und Führungskörper an dem zweiten Lenker befestigt ist oder einen Teil des zweiten Lenkers ausbildet.

Zweckmäßigerweise kann die wenigstens eine Führungsfläche im Wesentlichen planeben gestaltet sein. Mit anderen Worten kann die wenigstens eine Führungsfläche in einer senkrecht zu der ersten Schwenkachse des ersten Lenkers bzw. senkrecht zu der weiteren Schwenkachse des zweiten Lenkers ausgebildeten vertikalen Schnittebene durch eine Gerade begrenzt sein. Dies bedeutet eine weiter vereinfachte und robuste Konstruktion bei vorteilhaften Reibungs- Verschleiß- und Hebelarmverhältnissen.

Ferner kann vorgesehen sein, dass der Stütz- und Führungskörper mit wenigstens zwei zueinander beabstandeten Stütz-und Führungselementen ausgebildet ist, die jeweils wenigstens eine Führungsfläche für den wenigstens einen Roll-und/oder Gleitkörper aufweisen. Dadurch kann bei einfacher und robuster Konstruktion eine sichere Führung und Lagerung über den gesamten Verschwenkbereich erreicht werden.

Bevorzugt können mehrere bzw. die Führungsflächen parallel zueinander ausgebildet sein.

Ferner kann insbesondere bei der alternativen Ausgestaltung, bei welcher der zweite Lenker mit dem ersten Lenker über ein Gelenk gekoppelt ist, das sowohl ein Verschwenken als auch ein Verschieben des zweiten Lenkers relativ zu dem ersten Lenker ermöglicht, vorgesehen sein, dass die erste Schwenkachse des ersten Lenkers bezüglich dessen Längsachse derart außermittig angeordnet ist, dass sie in der Schließstellung der Wand oberhalb der Längsachse des ersten Lenkers angeordnet ist. Dadurch können weiter verbesserte Verschwenk- und Hebelverhältnisse erreicht werden.

Unabhängig von der Mechanik bzw. von dem Mechanismus der Anlenkung und Führung des zweiten Lenkers können weiter verbesserte Verschwenk- und Hebelverhältnisse dadurch erreicht werden, dass die erste Schwenkachse des ersten Lenkers oberhalb der Schwenkachse des Linearantriebes angeordnet ist.

Ferner kann vorgesehen sein, dass der Linearantrieb in der Schließstellung der Wand im Wesentlichen oder vollständig unterhalb der ersten Schwenkachse des ersten Lenkers angeordnet ist.

Ferner kann vorgesehen sein, dass die erste Schwenkachse des ersten Lenkers und die zweite Schwenkachse des ersten Lenkers in einem Abstand voneinander angeordnet sind, der etwa der Hälfte der Höhe der Wand entspricht. Dies bedeutet eine günstige Minimallänge für den Lenker, um ausgehend von der Schließstellung der Wand, ein vollständiges, Nachobenschwenken derselben ohne seitlichen Überstand über das Dach bzw. die Oberwand erreichen zu können.

Ferner kann vorgesehen sein, dass im Dachbereich des Transportbehälters, vorzugsweise im Bereich einer seiner Seitenkanten, ein die Anlagefläche aufweisendes Stütz- und Führungselement, vorzugsweise eine die Anlagefläche aufweisende Stütz- und Führungsrolle, angeordnet ist, auf dem bzw. auf der die Wand beim Verschwenken von einer Schließstellung in eine Öffnungsstellung, vorzugsweise frei abhebbar, anliegt. Dadurch lassen sich günstige Führungs- und Verschwenkverhältnisse schaffen.

Gemäß einer vorteilhaften Weiterbildung kann vorgesehen sein, dass in Schließstellung der Wand die zweite Schwenkachse des ersten Lenkers unterhalb der ersten Schwenkachse des ersten Lenkers angeordnet ist. Auf diese Weise wird erreicht, dass die Wand im Zuge ihres Verschwenkens ausgehend von ihrer Schließstellung, zunächst nach oben verschwenkt bzw. gezogen wird, bis die zweite Schwenkachse des ersten Lenkers auf gleicher Höhe wie die erste Schwenkachse des ersten Lenkers zu liegen kommt. Erst anschließend und im Zuge des weiteren Verschwenkens des ersten Lenkers mit Hilfe des Linearantriebes nach oben schwenkt die Wand nach außen. Dadurch wird der beim Verschwenken der Wand von ihrer Schließstellung in ihre Offenstellung von der Wand beanspruchte Raum bzw. Verkehrsraum insgesamt reduziert.

Zweckmäßigerweise kann vorgesehen sein, dass der Linearantrieb und/oder der erste Lenker an oder auf einem Dach-Träger bzw. oberen Träger des Transportbehälters angelenkt ist bzw. sind, dies ermöglicht eine stabile Abstützung der Mechanik bzw. des Mechanismus der Vorrichtung, ohne dass diese die Durchladebreite reduzieren würde oder das Be-oder Entladen behindern würde.

Ferner kann vorgesehen sein, dass die Wand über wenigstens zwei der ersten Lenker an dem Transportbehälter angelenkt ist, wobei wenigstens zwei der ersten Lenker über ein torsionssteifes Stabelement, vorzugsweise ein Rohr miteinander drehfest verbunden sind, dessen Längsachse koaxial zu den ersten Schwenkachsen der über das Stabelement verbundenen ersten Lenker angeordnet ist. Dadurch kann in besonders einfacher Art und Weise mit einer minimalen Anzahl von Teilen der Mechanik bzw. des Mechanismus der Vorrichtung unter Einsparung von Gewicht und Kosten die Wand bestimmungsgemäß verschwenkt werden.

Der eine Bauhöhe bestimmende Abstand zwischen der das Dach in der Schließstellung der Wand nach oben überragenden Teile eines wenigstens den ersten Lenker und den Linearantrieb, gegebenenfalls zusätzlich den zweiten Lenker, den Roll- und/oder Gleitkörper und den Stütz- und Führungskörper enthaltenden Mechanismus, und dem den Laderaum begrenzenden Dach kann vorteilhafter Weise kleiner als 25 cm, vorzugsweise kleiner als 20 cm, insbesondere gleich groß oder kleiner als 16 cm sein.

Ferner kann vorgesehen sein, dass die zweite Schwenkachse des ersten Lenkers, um welche die Wand schwenkbar an dem ersten Lenker angelenkt ist, von der in der Schließstellung der Wand nach außen weisenden Oberfläche der Wand oder von dem in der Schließstellung der Wand ausgebildeten Schwerpunkt der Wand, in einer Ebene senkrecht zu der zweiten Schwenkachse des ersten Lenkers betrachtet, einen Abstand aufweist. Dadurch kann sichergestellt werden, dass die Wand auch bei einem schräg bzw. geneigt stehenden Transportbehälter bzw. Aufbau oder Container dennoch sicher schließ-und gegebenenfalls verriegelbar ist. Durch diese Maßnahmen hat also die Wand schwerkraftbedingt das Bestreben, in ihre Schließstellung zu verschwenken bzw. zu pendeln. Um dieses Bestreben weiter zu unterstützten, kann ferner vorgesehen sein, dass zwischen dem ersten Lenker und der Wand eine sich in einem Verschwenkbereich, in welchem sich die Wand im Bereich ihrer Schließstellung befindet, an dem ersten Lenker und an der Wand abstützende Feder angeordnet ist, deren Federkräfte die Wand in Richtung ihrer Schließstellung beaufschlagt. Eine derartige Feder kann vorteilhaft als Druckfeder ausgebildet sein.

Ferner kann die Feder nur mit dem ersten Lenker fest verbunden sein, so dass sie in einer Öffnungsstellung der Wand von dieser abheben kann. Alternativ kann vorgesehen sein, dass die Feder nur mit der Wand fest verbunden ist, so dass sie in einer Öffnungsstellung der Wand von dem ersten Lenker abheben kann. In beiden Fällen kann eine Überbeanspruchung der vorzugsweise als Druckfeder ausgebildeten Feder wirksam verhindert werden.

Die Erfindung betrifft auch einen Transportbehälter, beispielsweise Fahrzeugaufbau, vorzugsweise Kastenaufbau, insbesondere eines Nutzfahrzeuges, oder einen Container, mit wenigstens einer Vorrichtung, welche die vorstehend niedergelegten Merkmale, sei es einzeln oder in beliebiger Kombination im Rahmen der Ausführbarkeit der Erfindung aufweisen kann und die insbesondere die Merkmale eines oder mehrerer der Ansprüche 1 bis 34 aufweisen kann.

Ein derartiger Transportbehälter kann mit wenigstens einer ersten, vorzugsweise einflügeligen, insbesondere einteiligen Wand und mit wenigstens einer zweiten, vorzugsweise einflügeligen, insbesondere einteiligen Wand versehen sein, die in ihren jeweiligen Schließstellungen gegenüberliegen und die jeweils mithilfe einer der Vorrichtungen, vorzugsweise nach einem der Ansprüche 1 bis 34, jeweils von einer Schließstellung in eine Öffnungsstellung, gegebenenfalls auch umgekehrt, überführbar sind.

Bei einem derartigen Transportbehälter kann ferner vorgesehen sein, dass die erste Wand oder die zweite Wand oder beide Wände im Bereich ihres in ihrer Schließstellung oberen Endes eine Anlagefläche aufweist bzw. aufweisen, auf der die zweite Wand oder die andere Wand beim Verschwenken von ihrer Schließstellung in ihre Öffnungsstellung, gegebenenfalls auch umgekehrt, unter gleichzeitiger Verschiebung relativ zu dieser, vorzugsweise frei abhebbar, anlegbar ist bzw. anliegt. Wenn also nicht nur die erste oder die zweite Wand, sondern die erste und die zweite Wand zum Zwecke der Schaffung eines Zuganges und/oder zum Zweckes eines Be- und/oder Entladens des Laderaumes nach oben geschwenkt bzw. geöffnet werden soll, kann zunächst eine der beiden Wände nach oben auf das Dach geschwenkt werden und anschließend oder gegebenenfalls auch gleichzeitig kann die andere Wand nach oben geschwenkt werden, die im Zuge dessen nach einem bestimmten zeitlichen Ablauf des Öffnungszyklus, beispielsweise im letzten Drittel des Öffnungszyklus, dann zusätzlich und/oder ausschließlich über die Anlagefläche der anderen Wand über diese verschwenkt bzw. gezogen werden kann.

Dabei kann vorgesehen sein, dass die erste Wand oder die zweite Wand oder beide Wände im Bereich ihres in ihrer Schließstellung oberen Endes ein die Anlagefläche aufweisendes Stütz- und Führungselement, vorzugsweise eine die Anlagefläche aufweisende Stütz- und Führungsrolle, aufweist bzw. aufweisen, auf dem bzw. auf der die zweite Wand oder die andere Wand bei ihrem Verschwenken, vorzugsweise frei abhebbar, anlegbar ist bzw. anliegt.

In dem nachfolgenden Beschreibungsteil ist ein bevorzugtes Ausführungsbeispiel der Erfindung beschrieben.

### Es zeigen:

- Fig. 1: einen Querschnitt eines kastenförmigen Fahrzeugaufbaus mit zwei im Dachbereich verschieblich gelagerten Seitenwänden, von denen die rechte Seitenwand in einer den Laderaum begrenzenden Schließstellung und die linke Seitenwand in mehreren Stellungen, und zwar in einer Schließstellung, sowie in zwei verschiedenen ZwischenÖffnungsstellungen, in welcher die Seitenwand teilweise über das Dach hochgeschwenkt ist und auch in einer maximalen Öffnungsstellung, in welcher die Seitenwand vollständig und ohne seitlichen Überstand über das Dach hochgeschwenkt ist;
- Fig. 2: einen Teil-Querschnitt des Fahrzeugaufbaus im Bereich der sich in einer den Laderaum begrenzenden Schließstellung befindlichen linken Seitenwand;
- Fig. 3: einen Querschnitt des Fahrzeugaufbaus mit den vollständig und ohne seitlichen Überstand über das Dach nach oben geschwenkten beiden Seitenwänden in ihrer maximalen Öffnungsstellung;
- Fig. 4: einen Teil-Querschnitt des Fahrzeugaufbaus im Dachbereich und im Bereich der linken, sich in ihrer Schließstellung befindlichen Seitenwand;
- Fig. 5: eine Teil-Draufsicht auf den Fahrzeugaufbau in dem in Figur 4 gezeigten Bereich;
- Fig. 6: einen vergrößerten Teil-Querschnitt des Fahrzeugaufbaus im Bereich der Mechanik bzw. des Mechanismus zum Verschwenken der Seitenwand, gemäß einer ersten Ausgestaltung;
- Fig. 7: einen vergrößerten Teil-Querschnitt eines Fahrzeugaufbaus im Bereich der Mechanik bzw. des Mechanismus zum Verschwenken der Seitenwand, gemäß einer alternativen Ausgestaltung mit einer Kulissenführung;
- Fig. 8: einen vergrößerten Teil-Querschnitt eines ähnlichen Fahrzeugaufbaus im Bereich der Mechanik bzw. des Mechanismus zum Verschwenken der Seitenwand, gemäß einer alternativen Ausgestaltung;
- Fig. 9: einen vergrößerten Längsschnitt entlang der Schnittlinien 9-9 in Figur 8.

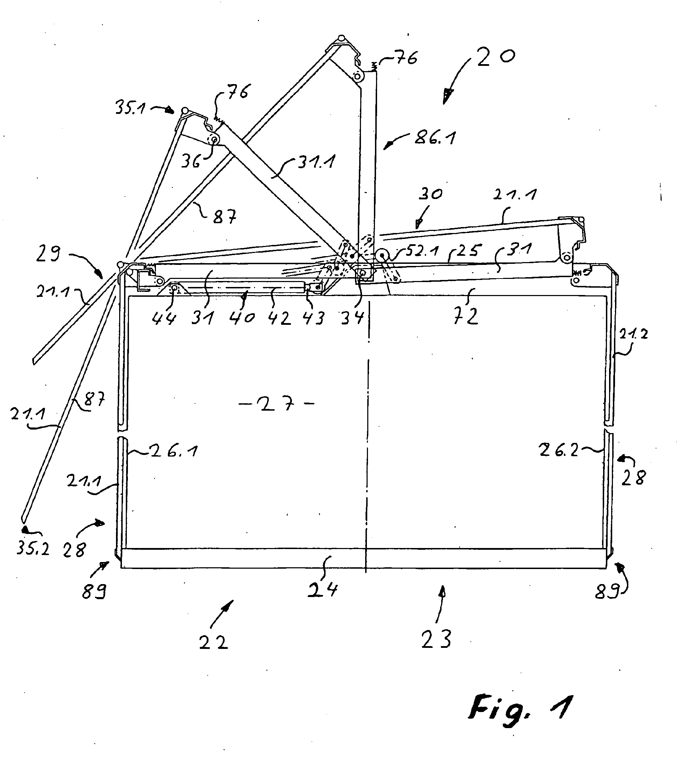

In Figur 1 ist ein Fahrzeugaufbau 23 bzw. Kastenaufbau eines Fahrzeuges, insbesondere eines Nutzfahrzeugs, als Transportbehälter 22 gezeigt. Dieser ist hier kastenförmig gestaltet und umfasst eine horizontale Unterwand bzw. einen Boden 24 und eine horizontale Oberwand bzw. ein Dach 25, das bzw. die mit wenigstens zwei beabstandeten Trägern bzw. Dachträgern 72 gestaltet ist und das bzw. die an dazu senkrecht ausgebildeten vertikalen Rungen 26 befestigt ist. Der Boden 24 bzw. die Unterwand, das Dach 25 bzw. die Oberwand und die Rungen 26 begrenzen einen Laderaum 27. An dem Transportbehälter 22 sind zwei einflügelige und vorzugsweise einteilige Wände 21.1 und 21.2 angelenkt, welche hier Seitenwände ausbilden, und mittels denen jeweils eine auf den beiden Seiten des Transportbehälters 22 bzw. des Fahrzeugaufbaus 23 zwischen dem Boden 24 bzw. der Unterwand und dem Dach 25 bzw. der Oberwand ausgebildete Ladeöffnung 85.1 und 85.2 den Laderaum 27 begrenzend verschließbar und wieder öffenbar ist. Die kompletten Wände 21.1 und 21.2 sind mittels einer Vorrichtung 20 an dem Transportbehälter 22 angelenkt, mit welcher sie von ihrer Schließstellung 28, in der sich die beiden Wände 21.1 und 21.2 gegenüberliegen, in eine maximale Öffnungsstellung 30 überführbar sind, in der sie vollständig und ohne seitlichen Überstand, also ohne dass ihre Enden 35.1 und 35.2 über die Oberwand bzw. über das Dach 25 seitlich überstehen, über das Dach 25 bzw. die Oberwand hochgeschwenkt sind, und umgekehrt.

Zu diesem Zwecke ist die jeweilige Wand 21; 21.1, 21.2 nur über jeweils eine Lenkeranordnung 86; 86.1, 86.2 an dem Transportbehälter 22 angelenkt, die hier aus zwei in einem etwa der Breite der Wand 21 entsprechenden Abstand zueinander angeordneten ersten Lenkern 31 besteht. Jeder erste Lenker 31 ist um eine im Bereich seines einen Endes 32 angeordnete erste Schwenkachse 34 verschwenkbar, die im Dachbereich bzw. im Bereich der Oberwand und hier an einem an einem Dachträger 72 bzw. Träger befestigten Stütz- und Führungskörper 60 angelenkt ist. Außerdem weist jeder erste Lenker 31 im Bereich seines anderen, von dem Ende 32 weg weisenden Ende 33, eine zweite Schwenkachse 36 auf, die in einem Abstand 46 zu der ersten Schwenkachse 34 und parallel zu dieser angeordnet ist, um welche die Wand 21 schwenkbar an der Lenkeranordnung 86, also hier an den beiden ersten Lenkern 31 angelenkt ist.

Die ersten Schwenkachsen 34 der ersten Lenker 31 der Lenkeranordnung 86 sind koaxial bzw. fluchtend zueinander angeordnet. Es versteht sich jedoch, dass die Wand 21 auch nur über einen einzigen derartigen ersten Lenker 31 oder über mehr als zwei derartige erste Lenker an dem Transportbehälter 22 angelenkt sein kann.

Bei einem Nachobenverschwenken der Wand 21 von ihrer Schließstellung 28 in ihre maximale Öffnungsstellung 30 bzw. Offenlage wird die Wand 21 von den ersten Lenkern 31 nach oben über das Dach 25 gezogen. Dabei liegt die Wand 21 an ihrer zum Transportbehälter 22 hinweisenden Innenfläche 87 an einer im Dachbereich bzw. im Bereich der Oberwand vorhandenen Anlagefläche 37 unter gleichzeitiger Verschiebung relativ zu dieser und von dieser frei abhebbar auf. Die Anlagfläche 37 ist an einem Stütz- und Führungselement 38 ausgebildet, bei dem es sich im gezeigten Ausführungsbeispiel um eine Stütz- und Führungsrolle 39 handelt. Diese ist um eine parallel zu den Schwenkachsen 34 und 36 des ersten Lenkers angeordnete Drehachse drehbar im Bereich einer oberen seitlichen Kante des Dachs 25 bzw. der Oberwand angeordnet.

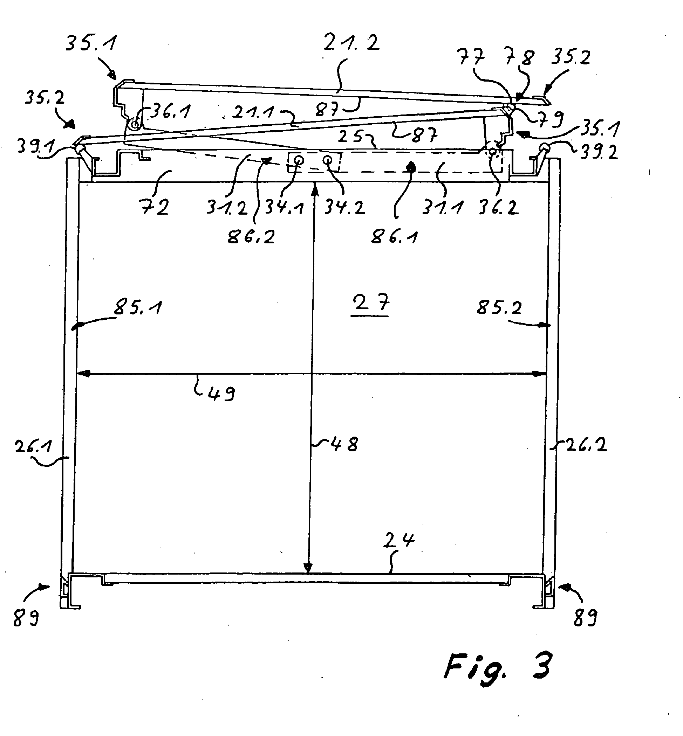

Wie insbesondere aus den Figuren 1 und 3 ersichtlich, kann die jeweilige Wand 21; 21.1, 21.2 mithilfe eines hier als hydraulisches Zylinder-Kolben-Aggregat 41 gestalteten Linearantriebes 40; 40.1, 40.2 von ihrer Schließstellung 28 in ihre maximale Öffnungsstellung 30 vollständig und ohne seitlichen Überstand über das Dach 25 bzw. die Oberwand hochgeschwenkt werden und ist auch mithilfe des Linearantriebes 40; 40.1, 40.2 wieder von ihrer maximalen Öffnungsstellung 30 in ihre Schließstellung 28 bzw. in eine Stellung im Bereich ihrer Schließstellung 28 überführbar. Zu diesem Zwecke umfasst der Linearantrieb 40; 40.1, 40.2 wenigstens einen Stützteil 42 und einen dazu linear beweglichen Betätigungsteil 43, wobei es sich bei dem Stützteil 42 im Ausführungsbeispiel um den Zylinder des Zylinder-Kolben-Aggregats 41 handelt und bei dem Betätigungsteil 43 um eine mit einem passenden Kolben verbundene Kolbenstange des Zylinder-Kolben-Aggregats 41.

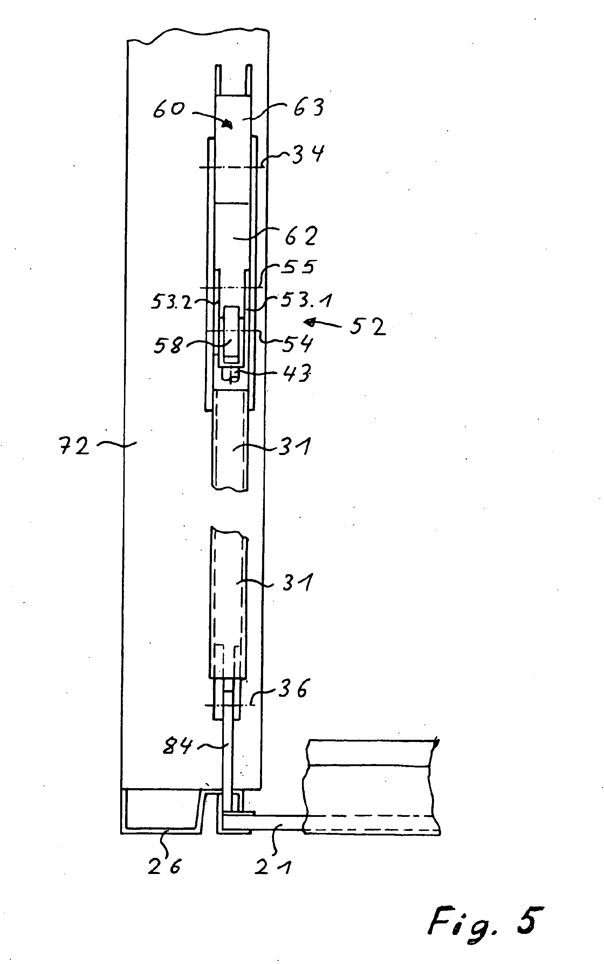

Der Betätigungsteil 43 des Linearantriebes 40; 40.1, 40.2 ist mittelbar an dem jeweiligen ersten Lenker beabstandet zu dessen erster Schwenkachse angelenkt, so dass der erste bzw. der jeweilige erste Lenker mithilfe des Linearantriebes um seine erste Schwenkachse verschwenkbar ist. In dem gezeigten Ausführungsbeispiel ist der Betätigungsteil 43 des Linearantriebes 40; 40.1, 40.2 mittelbar, und zwar über einen zweiten Lenker 52; 52.1, 52.2, an dem ersten Lenker 31; 31.1, 31.2 angelenkt, so dass der erste Lenker 31; 31.1, 31.2 mithilfe des Linearantriebes 40; 40.1, 40.2 um seine erste Schwenkachse 34 verschwenkbar ist. Der zweite Lenker 52 besteht hier aus zwei parallel zueinander angeordneten Laschen 53.1 und 53.2 (Figur 5) die um eine erste Schwenkachse 54 verschwenkbar an dem Betätigungsteil 43 des Linearantriebes 40; 40.1, 40.2 angelenkt sind. Im Ausführungsbeispiel weist der Betätigungsteil 43 bzw. die Kolbenstange an seinem bzw. ihrem von der Schwenkachse 36 des Linearantriebs 40 weg weisenden Ende eine U-förmige Aufnahme auf, die zwischen den beiden den zweiten Lenker 52 ausbildenden Laschen 53.1 und 53.2 angeordnet ist. Es versteht sich, dass anstelle des in den Figuren gezeigten hydraulischen Zylinder-Kolben-Aggregats 41 auch ein pneumatisches Zylinder-Kolben-Aggregat und/oder ein kolbenstangenloser Zylinder als Linearaktor bzw. Linearantrieb eingesetzt werden kann. Es sind auch andere Linearantriebe denkbar, beispielsweise elektrische Linearantriebe und/oder Linearantriebe, bei denen die Linearbewegung als Folge einer der Drehung einer Spindel in einer Mutter und/oder umgekehrt auftritt bzw. erreicht werden kann.

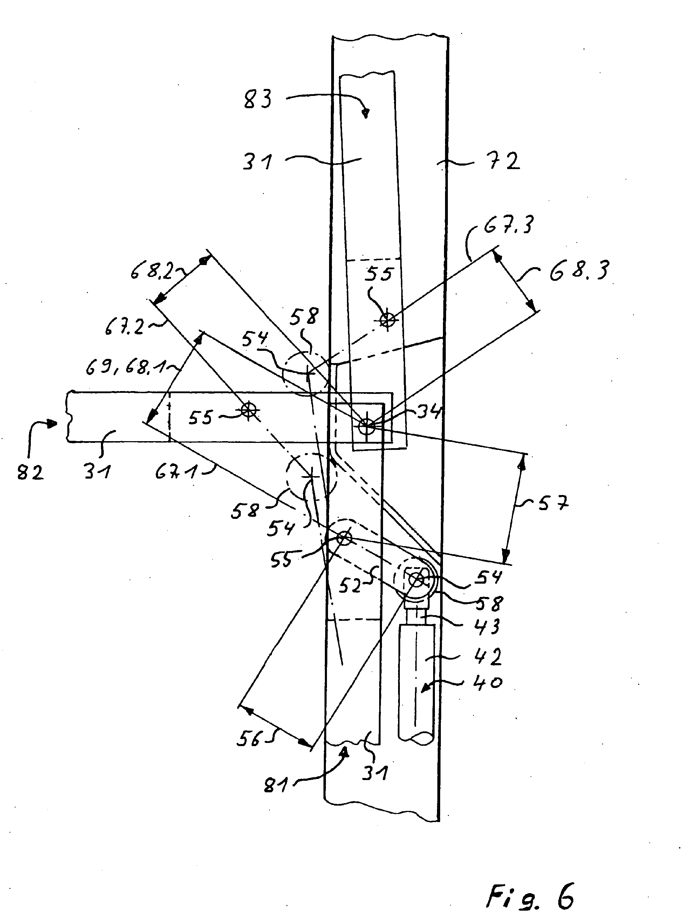

Zwischen den U-Schenkeln der U-förmigen Aufnahme ist ein als Rolle ausgebildeter Rollkörper 58 aufgenommen, der um die erste Schwenkachse 54 des ersten Lenkers 31 drehbar ist. Diese Rolle bzw. dieser Rollkörper 58 wird beim Verschwenken der Wand 21; 21.1, 21.2 mithilfe des Linearantriebes 40; 40.1, 40.2 von ihrer Schließstellung 28 in ihre Öffnungsstellung 30, und umgekehrt, aufgrund der Einwirkung bzw. der linearen Bewegung des Betätigungsteils 43 relativ zu dem Stützteil 42 des Linearantriebes 40 entlang einer im Dachbereich bzw. im Bereich der Oberwand des Transportbehälters 22 nach oben aufragenden Steuerkurvenfläche 61 eines Stütz- und Führungskörpers 60 entlang bewegt. Dabei stützt sich der erste Lenker 31; 31.1, 31.2 über den Rollkörper 58 bzw. über die Rolle an der Steuerkurvenfläche 61 des Stütz- und Führungskörpers 60 ab. Dadurch kann ein Verschwenken des ersten Lenkers 31 um seine erste Schwenkachse 34 und folglich ein Verschwenken der Wand 21 von ihrer Schließstellung 28 in ihre Öffnungsstellung 30, und umgekehrt, erreicht werden. Zu diesem Zwecke ist hier der zweite Lenker 52 um eine in einem Abstand 56 zu seiner erste Schwenkachse 54 angeordnete zweite Schwenkachse 55 verschwenkbar an dem ersten Lenker 31; 31.1, 31.2 angelenkt, und zwar in einem Abstand 57 zu dessen erster Schwenkachse 34 (Figur 6).

Wie insbesondere aus den Figuren 1, 4 und 6 ersichtlich, erstreckt sich die Steuerkurvenfläche 61 der Steuerkurve 59 des Stütz- und Führungskörpers 60 bis oberhalb der ersten Schwenkachse 34 des ersten Lenkers 31; 31.1, 31.2, die oberhalb der Schwenkachse 44 des Linearantriebes 40; 40.1, 40.2 angeordnet ist. Erfindungsgemäß ist die Steuerkurvenfläche 61 in einer gedachten Vertikalebene senkrecht zu der ersten Schwenkachse 34 des ersten Lenkers 31; 31.1, 31.2 nach oben gewölbt gestaltet. Konkret weist der Stütz- und Führungskörper 60 eine die Steuerkurvenfläche 61 enthaltende schiefe Ebene 62 auf, die in einem Winkel 64 von beispielsweise etwa 45 Grad zur Horizontalen bzw. zur Innenfläche des Daches 25 bzw. zur Innenfläche der Oberwand angeordnet ist. Die schiefe Ebene 62 erstreckt sich hier in einem die Bauhöhe bestimmenden Abstand 50 schräg nach oben. Im Bereich der Oberkante des Daches 25 bzw. im Bereich der oberen Kante der Oberwand geht die schiefe Ebene 62 in eine horizontale Ebene 63 über. Diese schließt mit der schiefen Ebene 61 einen Winkel ein, welcher der Differenz von 180 Grad abzüglich dem Winkel 64 entspricht. Folglich weist der Stütz- und Führungskörper 60 in einer gedachten Vertikalebene senkrecht zu der ersten Schwenkachse 34 des ersten Lenkers 31; 31.1, 31.2 einen von der Steuerkurvenfläche 61 nach oben begrenzten V-förmig gestalteten Querschnitt 65 auf, der wiederum hier Teil eines buckel- bzw. trapezförmigen Querschnitts 66 des Stütz- und Führungskörpers 60 ist.

In dem gezeigten Ausführungsbeispiel sind der erste Lenker 31; 31.1, 31.2 und der Linearantrieb 40; 40.1, 40.2 mit einem Mechanismus 45 derart gekoppelt, dass der erste Lenker 31; 31.1, 31.2 mithilfe des an ihm angelenkten Linearantriebes 40; 40.1, 40.2 um wenigstens 170 bis 180 Grad um seine erste Schwenkachse 34 verschwenkbar ist. Der Mechanismus 45 umfasst in dem gezeigten Ausführungsbeispiel den zweiten Lenker 52, die Rolle bzw. den Rollkörper 58 und den die Steuerkurve 59 aufweisenden Stütz- und Führungskörper 60. Der diese Elemente umfassende Mechanismus 45 erlaubt also ein Verschwenken des ersten Lenkers 31; 31.1, 31.2 um einen Schwenkwinkel von mehr als 150 Grad, vorzugsweise um mehr als 160 Grad, insbesondere, wie im Ausführungsbeispiel, um wenigstens 170 bis 180 Grad um seine erste Schwenkachse 34, und dies, obwohl der erste Lenker 31; 31.1, 31.2 mithilfe eines Linearantriebes 40 betätigt bzw. verschwenkt wird, dessen Stützelement 42 und dessen Betätigungselement 43 relativ zueinander ausschließlich eine geradlinige Bewegung auszuführen vermag. Sowohl der Mechanismus 45 als auch die mit diesem bzw. über diesen gekoppelten Bauteile, d. h. der Linearantrieb 40 und der erste Lenker 31, sind besonders einfach und kostengünstig herstellbar und auch bei widrigen Witterungsverhältnissen und größeren Belastungen äußerst robust.

In dem in den Figuren gezeigten Ausführungsbeispiel sind die vorgenannten Elemente bzw. Bauteile und insbesondere der Abstand der ersten Schwenkachse 34 des ersten Lenkers 31 von der zweiten Schwenkachse 55 des zweiten Lenkers 52 und der Abstand 56 dieser zweiten Schwenkachse 55 von der ersten Schwenkachse 54 des zweiten Lenkers derart gewählt, dass in Verbindung mit der gewählten Rampenschräge bzw. dem Neigungswinkel der schiefen Ebene 62 des Stütz- und Führungskörpers 60 stets ein etwa bzw. im Wesentlichen gleich großer Hebelarm 68; 68.1, 68.2, 68.3 ausgebildet ist.

Konkret ist der Abstand 68; 68.1, 68.2, 68.3 einer die erste Schwenkachse 54 und die zweite Schwenkachse 55 des zweiten Lenkers 52 enthaltenden gedachten Geraden 67; 67.1, 67.2, 67.3 in einer senkrecht zu diesen parallelen Schwenkachsen 54, 55, ausgebildeten gedachten Ebene von der parallel zu diesen Schwenkachsen 54, 55 ausgebildeten ersten Schwenkachse 34 des ersten Lenkers 31, mit Ausnahme des beim Verschwenken der Wand 21 im gesamten Verschwenkbereich, in welchem der Rollkörper 58 an der Steuerkurvenfläche 61 anliegt, auftretenden maximalen Abstandes 69 der Geraden 67; 67.1, 67.2, 67.3 von der ersten Schwenkachse 34 des ersten Lenkers 31, stets größer als die Hälfte, vorzugsweise zwei Drittel, insbesondere, wie vier Fünftel des maximalen Abstandes 69 der Abstände bzw. des jeweiligen Abstandes 68; 68.1, 68.2, 68.3 (siehe Figur 6).

Ergänzend ist darauf hinzuweisen, dass in dem gezeigten Ausführungsbeispiel der Linearantrieb 40; 40.1, 40.2 in der Schließstellung 28 der Wand 21; 21.1, 21.2 vollständig unterhalb des ersten Schwenkarmes 34 des ersten Lenkers 31; 31.1, 31.2 angeordnet ist. Ferner sind die erste Schwenkachse 34 des ersten Lenkers 31; 31.1, 31.2 und die zweite Schwenkachse 36 des ersten Lenkers 31; 31.1, 31.2 in einem Abstand 46 voneinander angeordnet, der etwa der Hälfte der Höhe 47 der Wand 21; 21.1, 21.2 entspricht. Auf diese Weise kann mithilfe des vorzugsweise in halbem Abstand zwischen den beiden zu verschwenkenden Wänden 21 bzw. des vorzugsweise in einem der halben Breite des Transportbehälters 22 entsprechenden Abstandes im Dachbereich angelenkten ersten Lenkers 31 die jeweilige Wand 21 vollständig und ohne seitlichen Überstand über das Dach 25 bzw. über die Oberwand des Transportbehälters 22 nach oben verschwenkt bzw. gezogen werden.

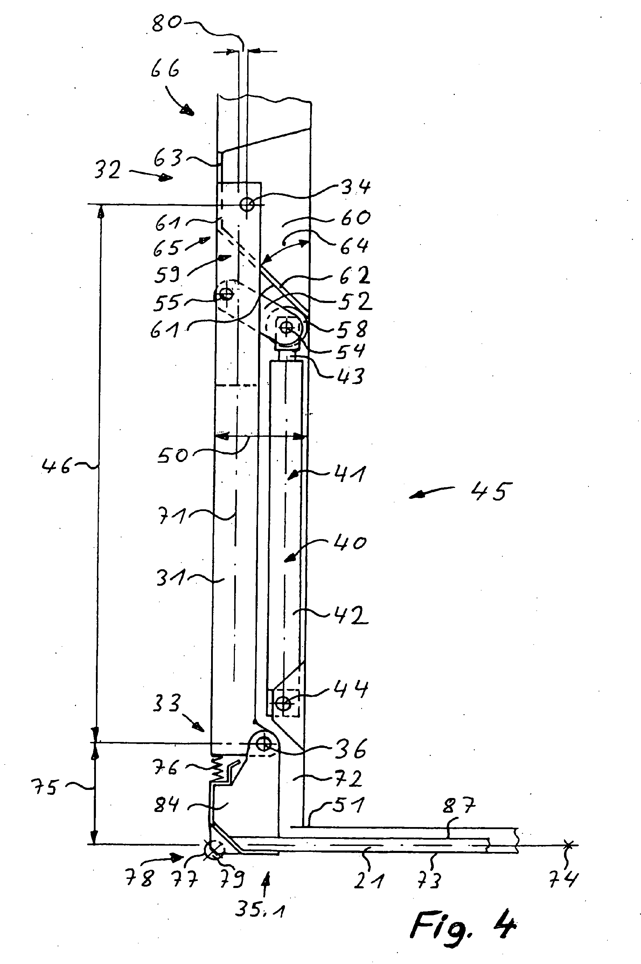

Wie insbesondere aus Figur 4 ersichtlich, ist die erste Schwenkachse 34 des ersten Lenkers 31 bezüglich dessen Längsachse 71 derart außermittig in einem Abstand 80 angeordnet, dass die erste Schwenkachse 34 in der Schließstellung 28 der Wand 21 unterhalb der Längsachse 71 des ersten Lenkers 31 angeordnet ist. Der erste Lenker 31 befindet sich in der Schließstellung 28 der jeweiligen Wand 21 in einer Horizontalstellung, in welcher dessen Längsachse 71 etwa parallel zu dem Dach 25 verläuft.

Wie bereits vorstehend erwähnt, ist im Ausführungsbeispiel die jeweilige Wand 21; 21.1, 21.2 jeweils über eine Lenkeranordnung 86; 86.1, 86.2 bestehend aus hier jeweils zwei ersten Lenkern 31; 31.1, 31.2, an dem Transportbehälter 22 angelenkt. Dabei kann vorgesehen sein, dass jedem ersten Lenker 31; 31.1, 31.2 ein Linearantrieb 40; 40.1, 40.2 zugeordnet ist, d. h. an diesem mittelbar über einen zweiten Lenker 52 angelenkt ist. Es versteht sich jedoch, dass alternativ auch mehreren ersten Lenkern der Lenkeranordnung ein gemeinsamer Linearantrieb zugeordnet sein kann, wobei dann wenigstens zwei der ersten Lenker über ein torsionssteifes Stabelement, vorzugsweise ein Rohr, miteinander drehfest verbunden sein können, dessen Längsachse koaxial zu den ersten Schwenkachsen der über das Stabelement verbundenen ersten Lenker angeordnet sein kann. In beiden Fällen kann, wie im Ausführungsbeispiel, der Linearantrieb 40; 40.1, 40.2 und der erste Lenker 31; 31.1, 31.2 an einem Dachträger 72 des Transportbehälters 22 angelenkt sein.

Die erfindungsgemäße Vorrichtung 20, insbesondere der erfindungsgemäße Mechanismus 45 mit seinen das Dach 25 in der Schließstellung der Wand 21 nach oben überragenden Teilen, d. h. wenigstens der erste Lenker 31; 31.1, 31.2 und der Linearantrieb 40; 40.1, 40.2 und bevorzugt außerdem der zweite Lenker 52, der Rollkörper 58 und der Stütz- und Führungskörper 60, kann derart gestaltet sein, dass der eine Bauhöhe bestimmende Abstand 50 zwischen dieser das Dach 25 in der Schließstellung der Wand 21; 21.1, 21.2 nach oben überragenden Teile der Vorrichtung 20 bzw. des Mechanismus 45 und dem den Laderaum 27 begrenzenden Dach 25 kleiner ist als 25 cm, vorzugsweise kleiner als 20 cm, insbesondere, wie im Ausführungsbeispiel, gleich groß oder kleiner ist als etwa 16 cm.

Die jeweilige Wand 21 weist im Bereich ihres oberen Endes 35.1 einen Querkörper 84 auf, der ihre den Laderaum 27 begrenzende Innenfläche 88 nach innen überragt. Die jeweilige Wand ist also L-förmig gestaltet. Die zweite Schwenkachse 36 des ersten Lenkers 31 ist im Bereich eines Endes des Querkörpers 84 angelenkt, das von der den Laderaum 27 in der Schließstellung 28 der Wand 21 begrenzten Innenfläche 88 in einem in Richtung nach innen versetzten Abstand angeordnet ist. Dabei weist die zweite Schwenkaches 36 des ersten Lenkers 31; 31.1, 31.2, um welche die an dem ersten Lenker 31; 31.1, 31.2 angelenkte Wand 21; 21.1, 21.2 schwenkbar ist, von der in der Schließstellung 28 der Wand 21 ; 21.1, 21.2 nach außen weisenden Oberfläche 73 der Wand 21; 21.1, 21.2, vorzugsweise von dem in der Schließstellung 28 der Wand 21; 21.1, 21.2 ausgebildeten Schwerpunkt 74 der Wand 21; 21.1, 21.2, in einer Ebene senkrecht zu der zweiten Schwenkachse 36 des ersten Lenkers betrachtet, einen einen Hebel bzw. Hebelarm vermittelnden Abstand 75 auf (Figur 4). Dadurch hat die Wand 21 schon von sich aus das Bestreben, in Richtung der unteren Verriegelung 89 zu verschwenken bzw. zu pendeln. Um diese Bestreben zu unterstützen, ist zwischen dem ersten Lenker 31; 31.1, 31.2 und der Wand 21; 21.1, 21.2 eine sich in einem Verschwenkbereich, in welchem sich die Wand 21; 21.1, 21.2 im Bereich ihrer Schließstellung 28 befindet, an dem ersten Lenker 31; 31.1, 31.2 und an der Wand 21; 21.1, 21.2 abstützende Feder 76 angeordnet, deren Federkräfte die Wand 21; 21.1, 21.2 in Richtung ihrer Schließstellung 28 beaufschlagt. In dem gezeigten Ausführungsbeispiel ist die Feder 76 als Druckfeder ausgebildet und ist nur mit dem ersten Lenker 31; 31.1, 31.2 fest verbunden, so dass sie in einer Öffnungsstellung, also beispielsweise in den in Figur 1 gezeigten Zwischenstellungen 29 und auch in ihrer maximalen Öffnungsstellung 30 von der Wand 21; 21.1, 21.2 abheben kann.

Nachfolgend wird der Vorgang des Öffnens der beiden Wände 21.1 und 21.2 näher beschrieben, in der diese also nach oben über das Dach 25 bzw. über die Oberwand des Transportbehälters 22 geschwenkt werden.

Durch Betätigung des ersten Linearantriebes 40 derart, dass dessen Betätigungsteil 43 relativ zu dessen Stützteil 42 eine den Abstand zwischen der Schwenkachse 44 des Linearantriebes 40 und der ersten Schwenkachse 54 des zweiten Lenkers 52 vergrößernde Linearbewegung ausführt, wird die Rolle bzw. der Rollkörper 58 auf die mit der schiefen Ebene 62 gebildete Rampe des Stütz- und Führungskörpers 60 gedrückt und läuft im Zuge des weiteren Ausfahrens des Betätigungsteils 43 die schiefe Ebene 62 nach oben. Dadurch entsteht über die dann als Schublaschen wirkenden Laschen 53.1, 53.2 des zweiten Lenkers 52 ein Druckraft, die über einen Hebelarm 68.1 auf den ersten Lenker 31 wirkt (Figur 6). Dadurch schwenkt der Lenker 31 ausgehend von der in Figur 6 gezeigten ersten Stellung 81, in welcher sich die Wand 21.1 in ihrer Schließstellung 28 befindet, um seine erste Schwenkachse 34 nach oben in Richtung der ebenfalls in Figur 6 gezeigten zweiten Stellung 82, in welcher die Längsachse 71 des ersten Lenkers 31 senkrecht nach oben aufragt. Dabei bzw. gleichzeitig zieht der erste Lenker 31 die Wand 21.1 über die eine Stütz- und Führungsrolle 79 bzw. über wenigstens zwei derartige, in Längsrichtung beabstandete Stütz- und Führungsrollen, nach oben über und auf das Dach 25. In dieser zweiten Stellung 82 ist die die erste Schwenkachse 54 und die zweite Schwenkachse 55 des zweiten Lenkers 52 enthaltende gedachte Gerade 67.2 von der ersten Schwenkachse 34 des ersten Lenkers 31 in einem einem zweiten Hebel bzw. Hebelarm entsprechenden zweiten Abstand 68.2 beabstandet angeordnet. In dieser Stellung 82 befindet sich der Rollkörper 58 im Bereich des oberen Endes der schiefen Ebene 62.

Im Zuge eines weiteren Ausfahrens des Betätigungsteils 43 des Linearantriebes 40 gelangt der Rollkörper 58 auf die horizontale Ebene 62 der Steuerkurvenfläche 61 des Stütz-und Führungskörpers 60. Dabei wird ein Totpunkt überschritten, vor dessen Erreichen das Gewicht der Wand 21.1 in Form von Druckkräften auf den zweiten Lenker 52 einwirkt und nach dessen Überschreiten das Gewicht der Wand 21.1 in Form von Zugkräften auf den zweiten Lenker 52 einwirkt.

Im Zuge eines weiteren Ausfahrens des Betätigungsteils 43 des Linearantriebes 40 wird der erste Lenker 31 bis hin in die in Figur 6 schematisch gezeigte dritte Stellung 83 verschwenkt, in welcher sich die Wand 21.1 in einer maximalen Öffnungsstellung 30 befindet und in welcher der erste Lenker 31 gegenüber seiner Ausgangsstellung 81, in welcher er sich in der Schließstellung 28 der Wand 21 befindet, um einen Schwenkwinkel von annähernd 180 Grad verschwenkt worden ist. In dieser Stellung 83 des ersten Lenkers 31 befindet sich die Wand 21.1 in einer nach oben vollständig und ohne seitlichen Überstand über das Dach 25 hochgeschwenkten Stellung, wie beispielsweise in den Figuren 1 und 3 ersichtlich.

Nachdem die erste Wand 21.1 nach oben in ihre maximale Öffnungsstellung 30 verschwenkt worden ist, oder gegebenenfalls auch gleichzeitig, kann bei Bedarf auch die zweite Wand 21.2 mithilfe eines zweiten Linearantriebes 40.2, der an dem wenigstens einen ersten Lenker 31.2 für die zweite Wand 21.2 angelenkt ist, ebenfalls nach oben über das Dach 25 verschwenkt werden. Dabei wird die an dem wenigstens einen weiteren ersten Lenker 31.2 angelenkte zweite Wand 21.2 zunächst über eine im Bereich der anderen oberen Kante des Dachs 25 bzw. der Oberwand des Transportbehälters 22 angeordnete weitere Stütz- und Führungsrolle 39.2 gezogen, an der die Innenfläche 87 der zweiten Wand 21.2 jedenfalls zunächst anliegt. Im Zuge des weiteren Verschwenkzyklus bzw. des weiteren Ausfahrens des Betätigungsteils 43 des zugehörigen Linearantriebes 40.2, beispielsweise im letzten Drittel der Öffnungsbewegung, gelangt die zweite Wand 21.2, respektive deren Innenfläche 87, auf eine im Bereich des oberen und dann dieser zweiten Wand 21.2 benachbarten Endes 35.1 der ersten Wand 21.1 angeordnete Anlagefläche 77 eines hier als Stütz- und Führungsrolle 79 ausgebildeten Stütz-und Führungselements 78, an der bzw. auf dem die zweite Wand 21.2 dann im Zuge ihres weiteren bzw. restlichen Verschwenkens in ihre Öffnungsstellung 30 frei abhebbar aufliegt.

Zum Zwecke eines Schließens der beiden Wände 21.1 und 21.2 wird dann in umgekehrter Reihenfolge zunächst die zweite Wand 21.2 mithilfe des zweiten Linearantriebes 40.2 über den ersten Lenker 31.2 der zweiten Lenkeranordnung 86.2 von ihrer maximalen Öffnungsstellung in ihre Schließstellung 28 zurückbewegt und dann oder gegebenenfalls auch zumindest teilweise gleichzeitig kann auch die erste Wand 21.1 mithilfe des ersten Linearantriebes 40.1 über ihre die beiden ersten Lenker 31.1 enthaltende Lenkeranordnung 86.1 von ihrer maximalen Öffnungsstellung 30 wieder zurück in ihre Schließstellung 28 bewegt werden. Am Ende der jeweiligen Schließbewegung kann dann die jeweilige Wand 21.1 und 21.2 in einer dieser jeweils zugeordneten unteren Verriegelung 89 einrasten oder kann in diesem Bereich mithilfe eines nicht näher gezeigten Verriegelungsmechanismus verriegelt werden.

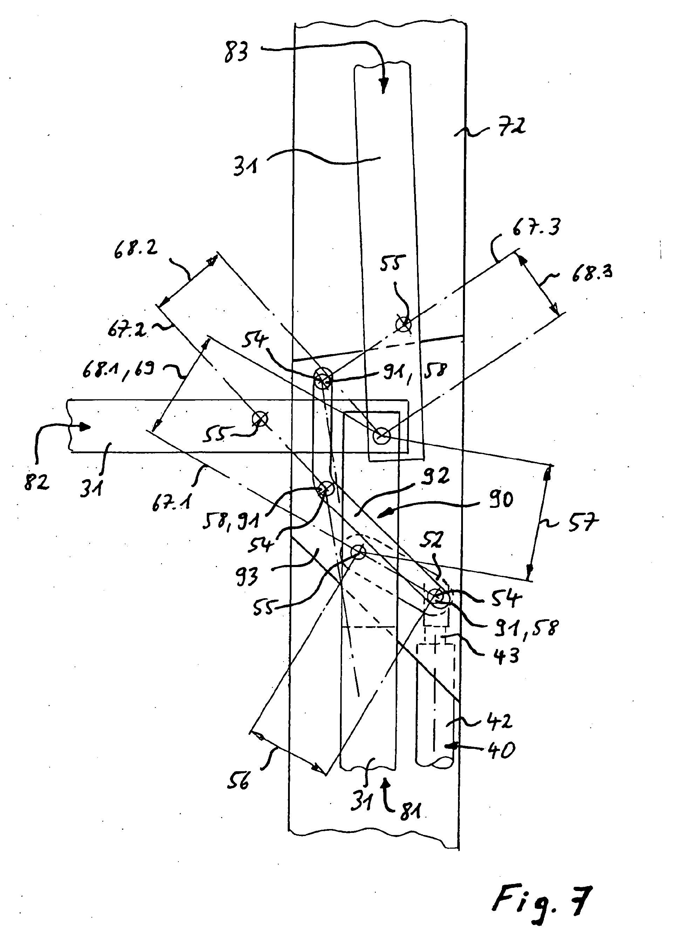

Alternativ zu der insbesondere in den Figuren 1, 4, 5 und 6 gezeigten Rampenkonstruktion eines Stütz- und Führungskörpers, bei welcher ein Rollkörper 58 beim Verschwenken der Wand 21; 21.1, 21.2 frei bzw. im wesentlichen frei auf der Steuerkurvenfläche 61 des Stütz- und Führungskörpers 60 aufliegt, kann der Stütz- und Führungskörper auch mit einer die Steuerkurvenfläche 61 enthaltenden Kulissenführung 90 gestaltet sein, wie beispielsweise in Figur 7 veranschaulicht. Dort sind gleiche bzw. funktionsgleiche Elemente mit gleichen Bezugszeichen gekennzeichnet. Bei der in Figur 7 gezeigten Ausführungsvariante ist ein die erste Schwenkachse 54 des zweiten Lenkers 52; 52.1, 52.2 enthaltender und als Steuerbolzen 91 gestalteter Steuerkörper vorgesehen, der in einem Führungsschlitz 91 bzw. in einer Führungsausnehmung der Kulissenführung 90 längs des Führungsschlitzes 91 bzw. längs der Führungsausnehmung verschieblich geführt ist, wobei der Steuerbolzen 91 beim Verschwenken der Wand 21; 21.1, 21.2 von ihrer Schließstellung 28 in ihre Öffnungsstellung 30, und umgekehrt, entlang der im Dachbereich des Transportbehälters 22 nach oben aufragenden Steuerkurvenfläche 61 des hier mit zwei parallelen Führungsplatten 93 gestalteten Stütz- und Führungskörpers 60 bewegt wird, an welcher sich der erste Lenker 31; 31.1, 31.2 über den Steuerbolzen 91 abstützt. Das Öffnen und Schließen der beiden Wände 21.1 und 21.2 erfolgt auch bei der in Figur 7 gezeigten Ausführungsvariante in gleicher Weise wie bereits vorstehend im Zusammenhang mit der ersten Ausführungsvariante einer Rampenkonstruktion beschrieben, so dass insoweit darauf verwiesen werden kann.

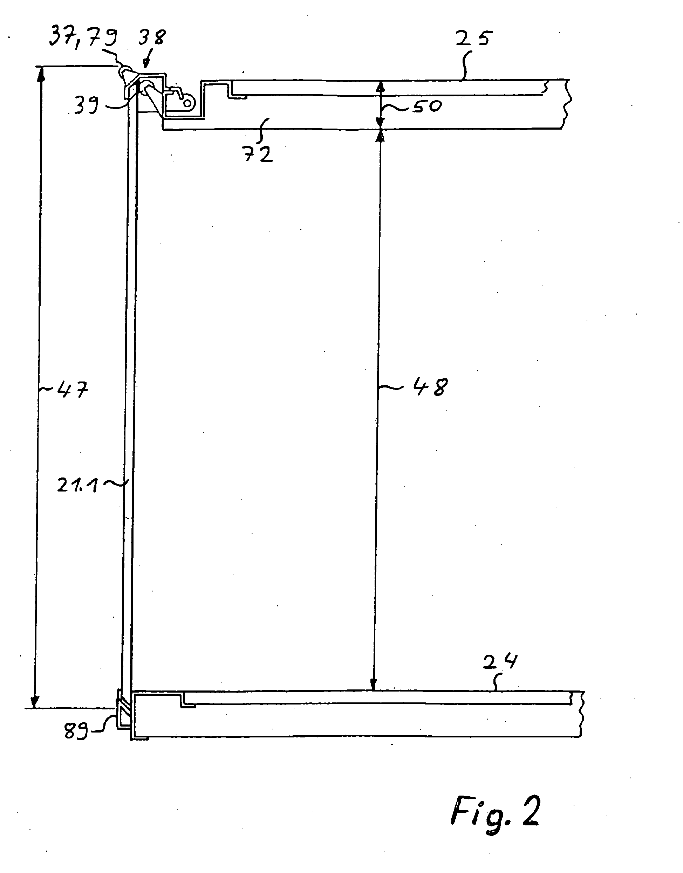

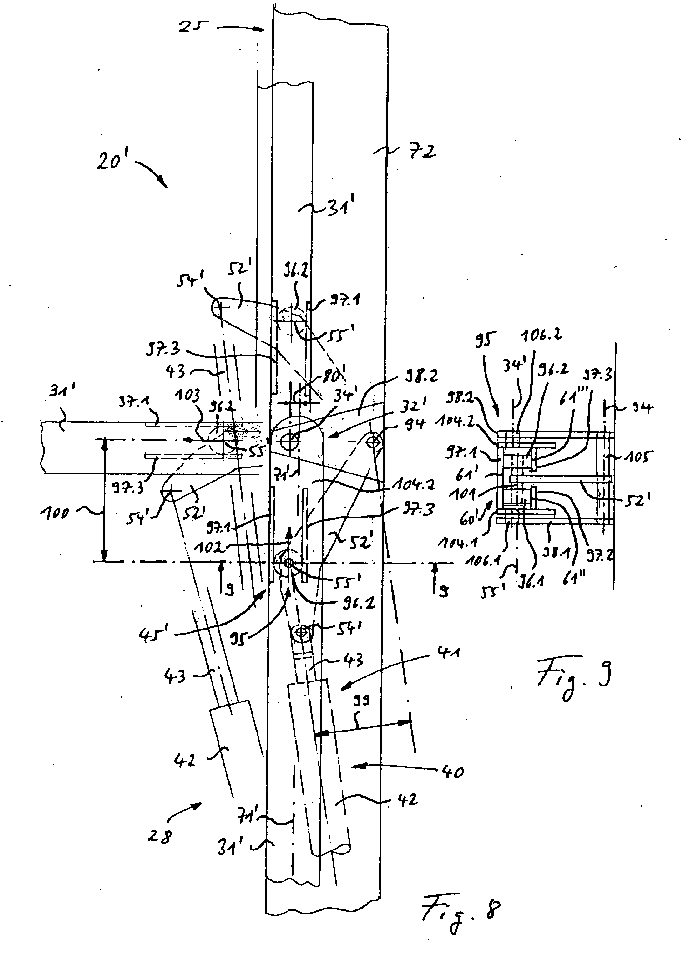

Die Figuren 8 und 9 zeigen ein alternatives Ausführungsbeispiel einer Vorrichtung 20', wobei gleiche Elemente mit gleichen Bezugszeichen gekennzeichnet sind, wie in den Figuren 1 bis 7. Diese Vorrichtung 20' bzw. der damit ausgestattete Transportbehälter ist mit Ausnahme der Mechanik bzw. des Mechanismus 45' gleich gestaltet wie die in den Figuren 1 bis 7 gezeigte Vorrichtung bzw. der dort gezeigte Transportbehälter 22.

Dabei sind der erste Lenker 31', der zweite Lenker 52' und der Linearantrieb 40 ebenfalls derart gekoppelt, dass der erste Lenker 31' mit Hilfe des Linearantriebes 40 wenigstens 170 bis 180 Grad um seine erste Schwenkachse 34' verschwenkbar ist.

Im Unterschied zu der vorstehend im Zusammenhang mit den Figuren 1 bis 7 erläuterten Konstruktion, sind jedoch nunmehr als wesentliche Elemente vorgesehen, dass an dem Betätigungsteil 43 des Linearantriebes 40 um eine erste Schwenkachse 54' verschwenkbar ein zweiter Lenker 52' angelenkt ist, der um eine beabstandet zu der ersten Schwenkachse 34' des ersten Lenkers 31' angeordnete weitere Schwenkachse 94 verschwenkbar im Dachbereich des Transportbehälters 22 an diesem angelenkt ist, wobei der zweite Lenker 52' mit dem ersten Lenker 31' über ein Gelenk 95 gekoppelt ist, das sowohl ein Verschwenken als auch ein Verschieben des zweiten Lenkers 52' relativ zu dem ersten Lenker 31' ermöglicht.

Beim Verschwenken der in den Figuren 8 und 9 nicht gezeigten Wand mit Hilfe des Linearantriebes 40 von ihrer Schließstellung 28 in ihres Öffnungsstellung, ggf. auch umgekehrt, wird der zweite Lenker 52' relativ zu dem ersten Lenker 31', zumindest in einem Teilschwenkbereich, vorzugsweise im Wesentlichen über oder über den gesamten Verschwenkbereich, sowohl verschwenkt als auch verschoben, wobei sich der erste Lenker 31' über das Gelenk 95 an dem zweiten Lenker 52' abstützt.

Das Gelenk 95 umfasst eine Schwenkachse 55', die beabstandet zu der weiteren Schwenkachse 94 des zweiten Lenkers 52' und hier auch beabstandet zu der ersten Schwenkachse 54' des zweiten Lenkers 52' angeordnet ist. In dem gezeigten Ausführungsbeispiel ist die Schwenkachse 55' Teil einer körperlichen Achse 101, die an dem zweiten Lenker 52' drehfest befestigt ist und die sich davon ausgehend in voneinander wegweisende Richtungen erstreckt (Fig. 9).

Im Bereich der beiden Enden der Achse 101 ist jeweils ein als Stützrolle gestalteter Rollkörper 96.1, 96.2 relativ zu der Achse 101 drehbar an der Achse 101 gelagert. Die Rollkörper 96.1, 96.2 sind jeweils zwischen zwei hier als Blechkörper getalteten Stütz- und Führungselementen 97.1, 97.2, 97.3 längs derselben verschieblich gelagert aufgenommen. Im gezeigten Ausführungsbeispiel sind ein gemeinsames oberes Stütz- und Führungselement 97.1 und jeweils ein unteres Stütz- und Führungselement 97.2, 97.3 vorgesehen, die an parallelen Lenkerblechen 104.1, 104.2 des ersten Lenkers 31' befestigt sind. Jedes Lenkerblech 104.1, 104.2 ist drehfest mit einer körperlichen Achse 106.1, 106.2 verbunden, wobei sich die Achsen 106.1, 106.2 voneinander weg nach außen erstrecken. Die die erste Schwenkachse 34' des ersten Lenkers 31' enthaltenden Achsen 106.1, 106.2 sind drehbar an, vorzugsweise als parallele Lagerbleche gestalteten, Lagerkörpern 98.1, 98.2 gelagert. Die Lagerkörper 98.1, 98.2 sind im Dachbereich des Transportbehälters, hier an einem Dachträger 72, befestigt. An den Lagerkörpern 98.1, 98.2 ist in einem vertikalen Abstand unterhalb der die erste Schwenkachse 34' enthaltenden Achsen 106.1, 106.2 eine weitere körperliche Achse 105 drehbar gelagert, welche die weitere Schwenkachse 94 des zweiten Lenkers 52' enthält. Diese weitere Schwenkachse 52' des zweiten Lenkers 52' ist parallel zu der ersten Schwenkachse 34' des ersten Lenkers 31' ausgebildet.

Die hier blechartigen Stütz- und Führungselemente 97.1, 97.2, 97.3 weisen Führungsflächen 61', 61", 61"' auf, die hier planeben und parallel zueinander ausgebildet sind. Diese Führungsflächen 61', 61", 61"' bilden hier jeweils planebene Steuerkurvenflächen aus, an denen die beiden Rollkörper 96.1, 96.2 des Gelenks 95 abrollen können, wenn der erste Lenker 31' mit Hilfe des Linearantriebes 40 über den zweiten Lenker 52' um die erste Schwenkachse 34' verschwenkt wird.

Wenn ausgehend von der in Figur 8 gezeigten Schließstellung 28 der dort nicht gezeigten Wand der als Kolbenstange gestaltete Betätigungsteil 42 des als Zylinder-Kolben-Aggregat 41 gestalteten Linearantriebes 40 relativ zu dem als Zylinder gestalteten Stützteil 42 ausgefahren wird, wird der zweite Lenker 52' um seine weitere Schwenkachse 94 hier in Uhrzeigerrichtung verschwenkt und zugleich wird die zweite Schwenkachse 55' des zweiten Lenkers 52' zusammen mit den beiden Rollkörpern 96.1 und 96.2 in Richtung des Pfeils 102 bewegt. Dabei wird die zweite Schwenkachse 55' des zweiten Lenkers 52' längs der Stütz- und Führungselemente 97.1, 97.2, 97.3 des ersten Lenkers 31' in Richtung des Pfeils 102 relativ zu dem ersten Lenker 31' verschoben, wobei die Rollkörper 96.1 und 96.2 unter Ausübung einer Druckkraft an der planebenen Führungs- und Steuerkurvenfläche 61' des oberen Stütz- und Führungselements 97.1 angedrückt werden. Dadurch wird der erste Lenker 31' um seine erste Schwenkachse 34' hier in Uhrzeigerrichtung verschwenkt. Ausgehend von der in Figur 8 gezeigten Schließstellung 28 werden über den Hebelarm 99 die Rollkörper 96.1 und 96.2 und der erste Lenker 31' wird über den Hebelarm 100 nach oben gedrückt, wodurch der erste Lenker 31' um seine erste Schwenkachse 34' hier im Uhrzeigersinn verschwenkt wird.

Im Zuge eines weiteren Ausfahrens des Betätigungsteils 43 des Linearantriebes 40 gelangt der erste Lenker 31' in eine in Figur 8 schematisch eingezeichnete Zwischen-Schwenkstellung, in der sich der erste Lenker 31' von dem Dach 25 senkrecht nach oben weg erstreckt. In dieser Zwischen-Schwenkstellung befindet sich die zweite Schwenkachse 55' des zweiten Lenkers 52' und befinden sich folglich die beiden Rollkörper 96.1 und 96.2 in einer relativ zu den Stütz- und Führungselementen 97.1 und 97.2 am weitesten rechts verschobenen Stellung, von der aus also ein Verschwenken des ersten Lenkers 31' um seine erste Schwenkachse 34' in beiden Schwenkrichtungen, d.h. hier bei einer Drehung im Uhrzeigersinn oder entgegen dem Uhrzeigersinn, zu einer Verschiebung der zweiten Schwenkachse 55' des zweiten Lenkers 52' und der beiden Rollkörper 96.1 und 96.2 in Richtung des Pfeils 103 führt.

Im Zuge eines weiteren Ausfahrens des Betätigungsteils 43 des Linearantriebes 40, ausgehend von der besagten Zwischen-Schwenkstellung, in der sich der erste Lenker 31' von dem Dach 25 senkrecht nach oben weg erstreckt, wird der erste Lenker 31' hier im Uhrzeigersinn weiter um seine erste Schwenkachse 34' verschwenkt. Dabei wird ein Totpunkt erreicht, ab dessen Überschreiten keine bzw. keine wesentlichen Druckkräfte mehr von den Rollkörpern 96.1, 96.2 auf die Führungsfläche 61' des gemeinsamen Stütz- und Führungselements 97.1 übertragen werden, sondern nur noch oder im Wesentlichen nur noch Druckkräfte auf die gegenüber liegenden Führungsflächen 61" und 61"' der Stütz- und Führungselemente 97.2 und 97.3, über die sich dann der erste Lenker 31' zusammen mit der von diesem getragenen Wand an bzw. auf dem zweiten Lenker 52' und über diesen an dem Transportbehälter abstützt.

Wie in Figur 8 ebenfalls schematisch eingezeichnet, kann der erste Lenker 31' über den Mechanismus bzw. die Mechanik 45', ausgehend von der in Figur 8 unten gezeigten Schließstellung 28, mit Hilfe des Linearantriebes 40 in die in Figur 8 oben gezeigte Öffnungsstellung um seine erste Schwenkachse 34' um einen Schwenkwinkel von 180 Grad verschwenkt werden.

In dem in Figur 8 gezeigten Ausführungsbeispiel ist die erste Schwenkachse 34' des ersten Lenkers 31' bezüglich dessen Längsachse 71' außermittig angeordnet, und zwar derart, dass sie in der gezeigten Schließstellung in einem Abstand 80' oberhalb der Längsachse 71' des ersten Lenkers 31' angeordnet ist.

Nachfolgend wird ein wichtiger Teil der Beschreibung wiedergegeben:

Die Erfindung betrifft eine Vorrichtung 20, 20' zum Überführen einer Wand 21; 21.1, 21.2 eines Transportbehälters 22, beispielsweise eines Fahrzeugaufbaus 23, von einer Schließstellung 28 in eine Öffnungsstellung 29, 30, und umgekehrt, mit einem einen Laderaum 27 begrenzenden Boden 24 und mit einem den Laderaum 27 begrenzenden Dach 25, wobei der Transportbehälter 22 wenigstens einen sich oberhalb des Laderaumes 27 erstreckenden ersten Lenker 31; 31.1, 31.2; 31' für die Wand 21; 21.1, 21.2 aufweist, der um eine erste Schwenkachse 34, 34' schwenkbar im Dachbereich des Transportbehälters 22 an diesem angelenkt ist, und wobei die Wand 21; 21.1, 21.2 im Bereich ihres in der Schließstellung 28 oberen Endes 35.1, 35.2 um eine zweite Schwenkachse 36 des ersten Lenkers 31; 31.1, 31.2; 31' verschwenkbar an diesem angelenkt ist, die beabstandet zu der ersten Schwenkachse 34, 34' des ersten Lenkers 31; 31.1, 31.2; 31' angeordnet ist, und wobei die Wand 21; 21.1, 21.2 nur über den ersten Lenker 31; 31.1, 31.2; 31' oder nur über mehrere derartige erste Lenker, die beabstandet zueinander angeordnet sind und deren erste Schwenkachsen 34 etwa koaxial angeordnet sind, an dem Transportbehälter 22 angelenkt ist und beim Verschwenken von ihrer Schließstellung 28 in ihre Öffnungsstellung 29, 30 und ggf. umgekehrt, an einer im Dachbereich des Transportbehälters 22 vorhandenen Anlagefläche, unter gleichzeitiger Verschiebung relativ zu dieser vorzugsweise abhebbar, insbesondere frei abhebbar anliegt, und wobei die Wand 21; 21.1, 21.2 von ihrer Schließstellung 28 in eine Öffnungsstellung 29, 30 über das Dach 25 mit Hilfe eines Linearantriebes 40 hochschwenkbar ist, ggf. auch umgekehrt, der einen Stützteil 42 und einen Betätigungsteil 43, umfasst, die relativ zueinander linear bewegbar sind, wobei der Stützteil 42 um eine Schwenkachse 44 schwenkbar im Dachbereich des Transportbehälters 22 an diesem angelenkt ist, und wobei der Betätigungsteil 43, vorzugsweise mittelbar, an dem ersten Lenker 31; 31.1, 31.2; 31' beabstandet zu dessen erster Schwenkachse 34, 34' angelenkt ist, so dass der erste Lenker 31; 31.1, 31.2; 31' mit Hilfe des Linearantriebes 40 um seine erste Schwenkachse 34, 34' verschwenkbar ist.

### BEZUGSZEICHENLISTE

| | | | |
|---|---|---|---|
| 20 | Vorrichtung | 34' | erste Schwenkachse von 31' |
| 20' | Vorrichtung | | |
| 21 | Wand | 35.1 | Ende von 21 |
| 21.1 | erste Wand | 35.2 | Ende von 21 |
| 21.2 | zweite Wand | 36 | zweite Schwenkachse von 31 |
| 22 | Transportbehälter | | |
| 23 | Fahrzeugaufbau | 36.2 | zweite Schwenkachse von 31 |
| 24 | Boden | | |
| 25 | Dach | 37 | Anlagefläche |
| 26 | Runge | 38 | Stütz- und Führungselement |
| 26.1 | Runge | | |
| 26.2 | Runge | 39 | Stütz- und Führungsrolle |
| 27 | Laderaum | | |
| 28 | Schließstellung | 39.1 | Stütz- und Führungsrolle |
| 29 | Zwischenstellung | | |
| 30 | Öffnungsstellung | 39.2 | Stütz- und Führungsrolle |
| 31 | erster Lenker | | |
| 31.1 | erster Lenker | 40 | Linearantrieb |
| 31.2 | erster Lenker | 40.1 | Linearantrieb |
| 31' | erster Lenker | 40.2 | Linearantrieb |
| 32 | Ende von 31 | 41 | Zylinder-Kolben-Aggregat |
| 32' | Ende von 31' | | |
| 33 | Ende von 31 | 42 | Stützteil (Zylinder) |
| 34 | erste Schwenkachse von 31 | 43 | Betätigungsteil (Kolbenstange) |
| 34.1 | erste Schwenkachse von 31 | 44 | Schwenkachse von 40, 41 |
| 34.2 | erste Schwenkachse von 31 | 45 | Mechanismus (Mechanik) |
| | | 45' | Mechanismus (Mechanik) |
| | | 46 | Abstand |
| 47 | Höhe von 31 | 64 | Winkel |
| 48 | Durchladehöhe | 65 | V-förmiger Querschnitt |
| 49 | Durchladebreite | 66 | buckel- bzw. trapez-förmiger Querschnitt |
| 50 | Abstand (Bauhöhe) | | |
| 51 | Seitenkante | 67 | Gerade |
| 52 | zweiter Lenker | 67.1 | Gerade |
| 52.1 | zweiter Lenker | 67.2 | Gerade |
| 52.2 | zweiter Lenker | 67.3 | Gerade |
| 52' | zweiter Lenker | 68 | Abstand (Hebelarm) |
| 53.1 | Lasche | 68.1 | Abstand (Hebelarm) |
| 53.2 | Lasche | 68.2 | Abstand (Hebelarm) |
| 54 | erste Schwenkachse von 52 | 68.3 | Abstand (Hebelarm) |
| | | 69 | maximaler Abstand |
| 54' | erste Schwenkachse von 52' | 70 | minimaler Abstand |
| | | 71 | Längsachse von 31 |
| 55 | zweite Schwenkachse von 52 | 71' | Längsachse von 31' |
| | | 72 | Dachträger |
| 55' | zweite Schwenkachse von 52' bzw. von 95 | 73 | Außenoberfläche von 31 |
| | | 74 | Schwerpunkt von 31 |
| 56 | Abstand | 75 | Abstand (Hebel) |
| 57 | Abstand | 76 | Feder (Druckfeder) |
| 58 | Rollkörper (Rolle) | 77 | Anlagefläche |
| 59 | Steuerkurve | 78 | Stütz- und Führungselement |
| 60 | Stütz- und Führungs-körper | 79 | Stütz- und Führungsrolle |
| 60' | Stütz- und Führungs-körper | 80 | Abstand |
| 61 | Steuerkurvenfläche | 80' | Abstand |
| 61' | Führungsfläche | 81 | erste Stellung (Schließstellung) |
| 61" | Führungsfläche | | |
| 61"' | Führungsfläche | 82 | zweite Stellung (Zwischenstellung) |
| 62 | schiefe Ebene | | |
| 63 | horizontale Ebene | | |
| 83 | dritte Stellung (Öffnungsstellung) | 101 | Achse |
| | | 102 | Pfeil |
| 84 | Querkörper | 103 | Pfeil |
| 85.1 | Ladeöffnung | 104.1 | Lenkerblech von 31' |
| 85.2 | Ladeöffnung | 104.2 | Lenkerblech von 31' |
| 86 | Lenkerpaar | 105 | Achse |
| 86.1 | Lenkeranordnung | 106.1 | Achse |
| 86.2 | Lenkeranordnung | 106.2 | Achse |
| 87 | Innenfläche von 21 | | |
| 89 | Verriegelung | | |
| 90 | Kulissenführung | | |
| 91 | Steuerbolzen | | |
| 92 | Führungsschlitz | | |
| 93 | Führungsplatte | | |
| 94 | weitere Schwenkachse von 52' | | |
| 95 | Gelenk | | |
| 96.1 | Rollkörper (Stützrolle) | | |
| 96.2 | Rollkörper (Stützrolle) | | |
| 97.1 | Stütz- und Führungselement (Blechkörper) | | |
| 97.2 | Stütz- und Führungselement (Blechkörper) | | |
| 97.3 | Stütz- und Führungselement (Blechkörper) | | |
| 98.1 | Lagerkörper (Lagerblech) | | |
| 98.2 | Lagerkörper (Lagerblech) | | |
| 99 | Hebelarm | | |
| 100 | Hebelarm | | |

## Patentansprüche

1. Transportbehälter, beispielsweise Fahrzeugaufbau oder Kastenaufbau, insbesondere eines Nutzfahrzeugs, mit einem einen Laderaum (27) begrenzenden Boden (24), mit einem den Laderaum (27) begrenzenden Dach (25) und mit einer Vorrichtung (20) zum Überführen einer Wand (21; 21.1, 21.2) des Transportbehälters (22), von einer Schließstellung (28) in eine Öffnungsstellung (29, 30) über das Dach (25), und umgekehrt, mit den folgenden Merkmalen:
- der Transportbehälter (22) weist wenigstens einen sich oberhalb des Laderaumes (27) erstreckenden ersten Lenker (31; 31.1, 31.2) für die Wand (21; 21.1, 21.2) auf;
- der erste Lenker (31; 31.1, 31.2) ist um eine erste Schwenkachse (34) schwenkbar im Dachbereich des Transportbehälters (22) an diesem angelenkt;
- die Wand (21; 21.1, 21.2) ist im Bereich ihres in der Schließstellung (28) oberen Endes (35.1) um eine zweite Schwenkachse (36) des ersten Lenkers (31; 31.1, 31.2) verschwenkbar an diesem angelenkt, die beabstandet zu der ersten Schwenkachse (34) des ersten Lenkers (31; 31.1, 31.2) angeordnet ist;
- die Wand (21; 21.1, 21.2) ist nur über den ersten Lenker (31; 31.1, 31.2) oder nur über mehrere derartige erste Lenker (31; 31:1, 31.2), die beabstandet zueinander angeordnet sind und deren erste Schwenkachsen (34; 34') etwa koaxial angeordnet sind, an dem Transportbehälter (22) angelenkt;
- die Wand (21; 21.1, 21.2) liegt beim Verschwenken von ihrer Schließstellung (28) in ihre Öffnungsstellung (29, 30), ggf. auch umgekehrt, an einer im Dachbereich des Transportbehälters (22) vorhandenen Anlagefläche (37), unter gleichzeitiger Verschiebung relativ zu dieser an,
**gekennzeichnet durch** die folgenden Merkmale:
- die Wand (21; 21.1, 21.2) ist mit Hilfe eines Linearantriebes (40 von ihrer Schließstellung (28) in die Öffnungsstellung (29, 30) über das Dach (25) hochschwenkbar und ist mit Hilfe des Linearantriebes (40) von der Öffnungsstellung (29, 30) in eine Schließstellung (28) überführbar;
- der Linearantrieb (40) umfasst einen Stützteil (42) und einen Betätigungsteil (43), die relativ zueinander linear bewegbar sind;
- der Stützteil (42) des Linearantriebes (40) ist um eine Schwenkachse (44) schwenkbar im Dachbereich des Transportbehälters (22) an diesem angelenkt;
- der Betätigungsteil (43) des Linearantriebes (40) ist mittelbar an dem ersten Lenker (31; 31.1, 31.2) beabstandet zu dessen ersten Schwenkachse (34; 34') angelenkt, so dass der erste Lenker (31; 31.1, 31.2) mit Hilfe des Linearantriebes (40) um seine erste Schwenkachse (34) verschwenkbar ist;
- an dem Betätigungsteil (43) des Linearantriebes (40) ist ein zweiter Lenker (52) um eine erste Schwenkachse (54) verschwenkbar angelenkt;
- der zweite Lenker (52) ist um eine beabstandet zu seiner ersten Schwenkachse (54) angeordnete zweite Schwenkachse (55) verschwenkbar an dem ersten Lenker (31; 31.1, 31.2) beabstandet zu dessen ersten Schwenkachse (34) angelenkt;
- der Linearantrieb (40) weist an seinem Betätigungsteil (43) und/oder der zweite Lenker (52) weist bzw. weisen einen Roll- und/oder Gleitkörper (58) auf, der beim Verschwenken der Wand (21; 21.1, 21.2) mit Hilfe des Linearantriebes (40; 40.1, 40.2) von ihrer Schließstellung (28) in ihre Öffnungsstellung (29, 30), ggf. auch umgekehrt, entlang einer im Dachbereich des Transportbehälters (22) nach oben aufragenden Steuerkurvenfläche (61) eines Stütz- und Führungskörpers (60) bewegt wird;
- der erste Lenker (31; 31.1, 31.2) stützt sich beim Verschwenken der Wand (21; 21.1, 21.2) von ihrer Schließstellung (28) in ihre Öffnungsstellung (29, 30), ggf. auch umgekehrt, über den Roll- und/oder Gleitkörper (58) an der Steuerkurvenfläche (61) des Stütz- und Führungskörpers (60) ab.

2. Transportbehälter nach Anspruch 1, **dadurch gekennzeichnet, dass** der erste Lenker (31; 31.1, 31.2) und/oder der Linearantrieb (40) mit einem Mechanismus (45) und/oder Antrieb derart gekoppelt sind, dass der erste Lenker (31; 31.1, 31.2) mit Hilfe des an ihm angelenkten Linearantriebes (40) um mehr als 150 Grad, vorzugsweise um mehr als 160 Grad, insbesondere um wenigstens 170 bis 180 Grad, um seine erste Schwenkachse (34) verschwenkbar ist.

3. Transportbehälter nach Anspruch 1 oder 2, **dadurch gekennzeichnet, dass** die erste Schwenkachse (34) des ersten Lenkers (31; 31.1, 31.2) bezüglich dessen Längsachse (71) außermittig angeordnet ist.

4. Transportbehälter nach wenigstens einem der Ansprüche 1 bis 3, **dadurch gekennzeichnet, dass** die Steuerkurvenfläche (61) sich bis oberhalb der Schwenkachse (44) des Linearantriebes (40), vorzugsweise auch bis oberhalb der ersten Schwenkachse (34) des ersten Lenkers (31; 31.1, 31.2), erstreckt.

5. Transportbehälter nach wenigstens einem der Ansprüche 1 bis 4, **dadurch gekennzeichnet, dass** die Steuerkurvenfläche (61) in einer gedachten Vertikalebene senkrecht zu der ersten Schwenkachse (34) des ersten Lenkers (31; 31.1, 31.2) nach oben gewölbt gestaltet ist.

6. Transportbehälter nach wenigstens einem der Ansprüche 1 bis 5, **dadurch gekennzeichnet, dass** der Stütz- und Führungskörper (60) eine die Steuerkurvenfläche (61) enthaltende schiefe Ebene (62) aufweist.

7. Transportbehälter nach wenigstens einem der Ansprüche 1 bis 6, **dadurch gekennzeichnet, dass** der Stütz- und Führungskörper (60) in einer gedachten Vertikalebene senkrecht zu der ersten Schwenkachse (34) des ersten Lenkers (31; 31.1, 31.2) einen von der Steuerkurvenfläche (61) nach oben begrenzten U-, V-, C- oder L-förmig gestalteten Querschnitt (65) aufweist.

8. Transportbehälter nach wenigstens einem der Ansprüche 1 bis 7, **dadurch gekennzeichnet, dass** der Stütz- und Führungskörper (60) in einer gedachten Vertikalebene senkrecht zu der ersten Schwenkachse (34) des ersten Lenkers (31; 31.1, 31.2) einen von der Steuerkurvenfläche (61) zumindest teilweise nach oben begrenzten buckel- oder trapezförmigen Querschnitt (66) aufweist.

9. Transportbehälter nach wenigstens einem der Ansprüche 1 bis 8, **dadurch gekennzeichnet, dass** der Roll- und/oder Gleitkörper (58) beim Verschwenken der Wand (21; 21.1, 21.2) in oder an einer die Steuerkurvenfläche (61) enthaltenden Kulissenführung (90) des Stütz- und Führungskörpers (60) geführt ist.

10. Transportbehälter nach wenigstens einem der Ansprüche 1 bis 9, **dadurch gekennzeichnet, dass** der Abstand (68; 68.1, 68.2, 68.3) einer die erste Schwenkachse (54) und die zweite Schwenkachse (55) des zweiten Lenkers (52) enthaltenden gedachten Geraden (67; 67.1, 67.2, 67.3) in einer senkrecht zu diesen parallelen Schwenkachsen (54, 55) ausgebildeten gedachten Ebene von der parallel zu diesen Schwenkachsen (54, 55) ausgebildeten ersten Schwenkachse (34) des ersten Lenkers (31; 31.1, 31.2), mit Ausnahme des beim Verschwenken der Wand (21; 21.1, 21.2) im gesamten Verschwenkbereich, in welchem der Roll- und/oder Gleitkörper (58) an der Steuerkurvenfläche (61) anliegt, auftretenden maximalen Abstandes 69 der Geraden (67; 67.1, 67.2, 67.3) von der ersten Schwenkachse (34) des ersten Lenkers(31; 31.1, 31.2), stets größer ist als die Hälfte, vorzugsweise zwei Drittel, insbesondere vier Fünftel des maximalen Abstandes (69) der Abstände (68; 68.1, 68.2, 68.3).

11. Transportbehälter nach wenigstens einem der Ansprüche 3 bis 10, **dadurch gekennzeichnet, dass** die erste Schwenkachse (34) des ersten Lenkers (31; 31.1, 31.2) bezüglich dessen Längsachse (71) derart außermittig angeordnet ist, dass sie in der Schließstellung (28) der Wand (21; 21.1, 21.2) unterhalb der Längsachse (71) des ersten Lenkers (31; 31.1, 31.2) angeordnet ist.

12. Transportbehälter, beispielsweise Fahrzeugaufbau oder Kastenaufbau, insbesondere eines Nutzfahrzeugs, mit einem einen Laderaum (27) begrenzenden Boden (24), mit einem den Laderaum (27) begrenzenden Dach (25) und mit einer Vorrichtung (20') zum Überführen einer Wand (21; 21.1, 21.2) des Transportbehälters (22), von einer Schließstellung (28) in eine Öffnungsstellung (29, 30) über das Dach (25), und umgekehrt, mit den folgenden Merkmalen:
- der Transportbehälter (22) weist wenigstens einen sich oberhalb des Laderaumes (27) erstreckenden ersten Lenker (31') für die Wand (21; 21.1, 21.2) auf;
- der erste Lenker (31') ist um eine erste Schwenkachse (34') schwenkbar im Dachbereich des Transportbehälters (22) an diesem angelenkt;
- die Wand (21; 21.1, 21.2) ist im Bereich ihres in der Schließstellung (28) oberen Endes (35.1) um eine zweite Schwenkachse (36) des ersten Lenkers (31') verschwenkbar an diesem angelenkt, die beabstandet zu der ersten Schwenkachse (34') des ersten Lenkers (31') angeordnet ist;
- die Wand (21; 21.1, 21.2) ist nur über den ersten Lenker (31') oder nur über mehrere derartige erste Lenker (31'), die beabstandet zueinander angeordnet sind und deren erste Schwenkachsen (34') etwa koaxial angeordnet sind, an dem Transportbehälter (22) angelenkt;
- die Wand (21; 21.1, 21.2) liegt beim Verschwenken von ihrer Schließstellung (28) in ihre Öffnungsstellung (29, 30), ggf. auch umgekehrt, an einer im Dachbereich des Transportbehälters (22) vorhandenen Anlagefläche (37), unter gleichzeitiger Verschiebung relativ zu dieser an,
**gekennzeichnet durch** die folgenden Merkmale:
- die Wand (21; 21.1, 21.2) ist mit Hilfe eines Linearantriebes (40) von ihrer Schließstellung (28) in die Öffnungsstellung (29, 30) über das Dach (25) hochschwenkbar und ist mit Hilfe des Linearantriebes (40) von der Öffnungsstellung (29, 30) in eine Schließstellung (28) überführbar;
- der Linearantrieb (40) umfasst einen Stützteil (42) und einen Betätigungsteil (43), die relativ zueinander linear bewegbar sind;
- der Stützteil (42) des Linearantriebes (40) ist um eine Schwenkachse (44) schwenkbar im Dachbereich des Transportbehälters (22) an diesem angelenkt;
- der Betätigungsteil (43) des Linearantriebes (40) ist mittelbar an dem ersten Lenker (31') beabstandet zu dessen ersten Schwenkachse (34') angelenkt, so dass der erste Lenker (31') mit Hilfe des Linearantriebes (40) um seine erste Schwenkachse (34') verschwenkbar ist;
- an dem Betätigungsteil (43) des Linearantriebes (40) ist ein zweiter Lenker (52') um eine erste Schwenkachse (54') verschwenkbar angelenkt;
- der zweite Lenker (52') ist um eine weitere Schwenkachse (94) verschwenkbar im Dachbereich des Transportbehälters (22) an diesem angelenkt;
- die weitere Schwenkachse (94) ist beabstandet zu der ersten Schwenkachse (34') des ersten Lenkers (31') angeordnet;
- der zweite Lenker (52') ist mit dem ersten Lenker (31') über ein Gelenk (95) gekoppelt, das sowohl ein Verschwenken als auch ein Verschieben des zweiten Lenkers (52') relativ zu dem ersten Lenker (31') ermöglicht;
- das Gelenk (95) umfasst wenigstens einen um eine Schwenkachse (55') verschwenkbaren Roll- und/oder Gleitkörper (96.1, 96.2) und einen wenigstens eine Führungsfläche (61', 61", 61"') und/oder wenigstens eine Steuerkurvenfläche (61', 61", 61'") aufweisenden Stütz- und Führungskörper (60') für den wenigstens einen Roll- und/oder Gleitkörper (96.1, 96.2);
- der erste Lenker (31') stützt sich beim Verschwenken der Wand (21; 21.1, 21.2) von ihrer Schließstellung (28) in ihre Öffnungsstellung (29, 30), und umgekehrt, über den Roll- und/oder Gleitkörper (96.1, 96.2) an der mindestens einen Führungsfläche (61', 61", 61"') bzw. an der mindestens einen Steuerkurvenfläche (61', 61", 61"') ab;
- entweder ist der Stütz- und Führungskörper (60') mit wenigstens zwei zueinander beabstandeten Stütz- und Führungselementen (97.1, 97.2, 97.3) ausgebildet, die jeweils wenigstens eine Führungsfläche (61', 61", 61"') für den wenigstens einen Roll- und/oder Gleitkörper (96.1, 96.2) aufweisen,
- oder ist der Roll- und/oder Gleitkörper beim Verschwenken der Wand (21; 21.1, 21.2) in oder an einer die Steuerkurvenfläche enthaltenden Kulissenführung des Stütz- und Führungskörpers (60) geführt.

13. Transportbehälter nach Anspruch 12, **dadurch gekennzeichnet dass** der erste Lenker (31') und/oder der Linearantrieb (40) mit einem Mechanismus (45') und/oder Antrieb derart gekoppelt sind, dass der erste Lenker (31') mit Hilfe des an ihm angelenkten Linearantriebes (40) um mehr als 150 Grad, vorzugsweise um mehr als 160 Grad, insbesondere um wenigstens 170 bis 180 Grad, um seine erste Schwenkachse (34') verschwenkbar ist.

14. Transportbehälter nach Anspruch 12 oder 13, **dadurch gekennzeichnet, dass** das Gelenk (95) eine Schwenkachse (55') umfasst, die beabstandet zu der ersten Schwenkachse (54') des zweiten Lenkers (52') und auch beabstandet zu der weiteren Schwenkachse (94) des zweiten Lenkers (52') angeordnet ist.

15. Transportbehälter nach einem der Ansprüche 12 bis 14, **dadurch gekennzeichnet, dass** der Roll- und/oder Gleitkörper (96.1, 96.2) an dem zweiten Lenker (52') befestigt bzw. angelenkt ist oder einen Teil des zweiten Lenkers ausbildet und dass der Stütz- und Führungskörper (60') an dem ersten Lenker (31') befestigt ist oder einen Teil des ersten Lenkers (31') ausbildet.

16. Transportbehälter nach einem der Ansprüche 12 bis 15, **dadurch gekennzeichnet, dass** der Roll- und/oder Gleitkörper an dem ersten Lenker befestigt bzw. angelenkt ist oder einen Teil des ersten Lenkers ausbildet und dass der Stütz- und Führungskörper an dem zweiten Lenker befestigt ist oder einen Teil des zweiten Lenkers ausbildet.

17. Transportbehälter nach wenigstens einem der Ansprüche 12 bis 16, **dadurch gekennzeichnet, dass** die wenigstens eine Führungsfläche (61', 61", 61"') im Wesentlichen planeben gestaltet ist.

18. Transportbehälter nach wenigstens einem der Ansprüche 12 bis 17, **dadurch gekennzeichnet, dass** mehrere bzw. die Führungsflächen (61', 61", 61"') parallel zueinander ausgebildet sind.

19. Transportbehälter nach wenigstens einem der Ansprüche 12 bis 18, **dadurch gekennzeichnet, dass** die erste Schwenkachse (34') des ersten Lenkers (31') bezüglich dessen Längsachse (71') derart außermittig angeordnet ist, dass sie in der Schließstellung (28) der Wand (21; 21.1, 21.2) oberhalb der Längsachse (71') des ersten Lenkers (31') angeordnet ist.

20. Transportbehälter nach wenigstens einem der vorstehenden Ansprüche, **dadurch gekennzeichnet, dass** die erste Schwenkachse (34; 34') des ersten Lenkers (31; 31.1, 31.2; 31') oberhalb der Schwenkachse (44) des Linearantriebes (40) angeordnet ist.

21. Transportbehälter nach wenigstens einem der vorstehenden Ansprüche, **dadurch gekennzeichnet, dass** der Linearantrieb (40) in der Schließstellung (28) der Wand (21; 21.1, 21.2) im Wesentlichen oder vollständig unterhalb der ersten Schwenkachse (34; 34') des ersten Lenkers (31; 31.1, 31.2; 31') angeordnet ist.

22. Transportbehälter nach wenigstens einem der vorstehenden Ansprüche, **dadurch gekennzeichnet, dass** die erste Schwenkachse (34; 34') des ersten Lenkers (31; 31.1, 31.2; 31') und die zweite Schwenkachse (36) des ersten Lenkers (31; 31.1, 31.2; 31') in einem Abstand (46) voneinander angeordnet sind, der etwa der Hälfte der Höhe (47) der Wand (21; 21.1, 21.2) entspricht.

23. Transportbehälter nach wenigstens einem der vorstehenden Ansprüche, **dadurch gekennzeichnet, dass** im Dachbereich des Transportbehälters (22), vorzugsweise im Bereich einer seiner Seitenkanten (51), ein die Anlagefläche (37) aufweisendes Stütz- und Führungselement (38), vorzugsweise eine die Anlagefläche (37) aufweisende Stütz- und Führungsrolle (39), angeordnet ist, auf dem bzw. auf der die Wand (21; 21.1, 21.2) beim Verschwenken von einer Schließstellung (28) in eine Öffnungsstellung (29, 30), vorzugsweise frei abhebbar, anliegt.

24. Transportbehälter nach wenigstens einem der vorstehenden Ansprüche, **dadurch gekennzeichnet, dass** der Linearantrieb (40) und/oder der erste Lenker (31; 31.1, 31.2; 31') an oder auf einem Dach-Träger (72) des Transportbehälters (22) angelenkt ist bzw. sind.

25. Transportbehälter nach wenigstens einem der vorstehenden Ansprüche, **dadurch gekennzeichnet, dass** die Wand über wenigstens zwei der ersten Lenker an dem Transportbehälter angelenkt ist, wobei wenigstens zwei der ersten Lenker über ein torsionssteifes Stabelement, vorzugsweise ein Rohr, miteinander drehfest verbunden sind, dessen Längsachse koaxial zu den ersten Schwenkachsen der über das Stabelement verbundenen ersten Lenker angeordnet ist.

26. Transportbehälter nach wenigstens einem der vorstehenden Ansprüche, **dadurch gekennzeichnet, dass** der eine Bauhöhe (50) bestimmende Abstand (50) zwischen der das Dach (25) in der Schließstellung der Wand (21; 21.1, 21.2) nach oben überragenden Teile eines wenigstens den ersten Lenker (31; 31.1, 31.2; 31') und den Linearantrieb (40), ggf. auch den zweiten Lenker (52; 52'), den Roll- und/oder Gleitkörper (58; 95) und den Stütz- und Führungskörper (60; 60') enthaltenden Mechanismus (45; 45'), und dem den Laderaum (27) begrenzenden Dach (25) kleiner ist als 25 cm, vorzugsweise kleiner ist als 20 cm, insbesondere gleich groß oder kleiner ist als etwa 16 cm.

27. Transportbehälter nach wenigstens einem der vorstehenden Ansprüche, **dadurch gekennzeichnet, dass** die zweite Schwenkachse (36) des ersten Lenkers (31; 31.1, 31.2; 31'), um welche die an dem ersten Lenker (31; 31.1, 31.2, 31") angelenkte Wand (21; 21.1, 21.2) schwenkbar ist, von der in der Schließstellung (28) der Wand (21; 21.1, 21.2) nach außen weisenden Oberfläche (73) der Wand (21; 21.1, 21.2), oder von dem in der Schließstellung (28) der Wand (21; 21.1, 21.2) ausgebildeten Schwerpunkt (74) der Wand (21; 21.1, 21.2), in einer Ebene senkrecht zu der zweiten Schwenkachse (36) des ersten Lenkers (31; 31.1, 31.2; 31') betrachtet, einen Abstand (75) aufweist.

28. Transportbehälter nach wenigstens einem der vorstehenden Ansprüche, **dadurch gekennzeichnet, dass** zwischen dem ersten Lenker (31; 31.1, 31.2; 31') und der Wand (21; 21.1, 21.2) eine sich in einem Verschwenkbereich, in welchem sich die Wand (21; 21.1, 21.2) im Bereich ihrer Schließstellung (28) befindet, an dem ersten Lenker (31; 31.1, 31.2; 31') und an der Wand (21; 21.1, 21.2) abstützende Feder (76) angeordnet ist, deren Federkräfte die Wand (21; 21.1, 21.2) in Richtung ihrer Schließstellung (28) beaufschlagt.

29. Transportbehälter nach Anspruch 28, **dadurch gekennzeichnet, dass** die Feder (76) als Druckfeder ausgebildet ist.

30. Transportbehälter nach Anspruch 28 oder 29, **dadurch gekennzeichnet, dass** die Feder (76) nur mit dem ersten Lenker (31; 31.1, 31.2; 31') fest verbunden ist, so dass sie in einer Öffnungsstellung (29, 30) der Wand (21; 21.1, 21.2) von dieser abheben kann.

31. Transportbehälter nach Anspruch 28 oder 29, **dadurch gekennzeichnet, dass** die Feder nur mit der Wand fest verbunden ist, so dass sie in einer Öffnungsstellung der Wand von dem ersten Lenker abheben kann.

32. Transportbehälter (22) nach wenigstens einem der vorstehenden Ansprüche, mit wenigstens einer ersten, vorzugsweise einflügeligen, insbesondere einteiligen Wand (21.1) und mit wenigstens einer zweiten, vorzugsweise einflügeligen, insbesondere einteiligen Wand (21.2), die in ihren jeweiligen Schließstellungen (28) gegenüber liegen und die jeweils mit Hilfe einer der Vorrichtungen (20; 20') jeweils von einer Schließstellung (28) in eine Öffnungsstellung (29, 30), ggf. auch umgekehrt, überführbar sind.

33. Transportbehälter nach Anspruch 32, **dadurch gekennzeichnet, dass** die erste Wand (21.1) oder die zweite Wand oder beide Wände im Bereich ihres in ihrer Schließstellung (28) oberen Endes (35.1) eine Anlagefläche (77) aufweist bzw. aufweisen, auf der die zweite Wand (21.2) oder die andere Wand beim Verschwenken von ihrer Schließstellung (28) in Ihre Öffnungsstellung (29, 30), ggf. auch umgekehrt, unter gleichzeitiger Verschiebung relativ zu dieser, vorzugsweise frei abhebbar, anlegbar ist bzw. anliegt.

34. Transportbehälter nach Anspruch 33, **dadurch gekennzeichnet, dass** die erste Wand (21.1) oder die zweite Wand oder beide Wände im Bereich ihres in ihrer Schließstellung (28) oberen Endes (35.1) ein die Anlagefläche (77) aufweisendes Stütz- und Führungselement (78), vorzugsweise eine die Anlagefläche (77) aufweisende Stütz- und Führungsrolle (79), aufweist bzw. aufweisen, auf dem bzw. auf der die zweite Wand (21.2) oder die andere Wand bei ihrem Verschwenken, vorzugsweise frei abhebbar, anlegbar ist bzw. anliegt.

## Claims

1. Transport container, for example vehicle body or box body, particularly a utility vehicle, with a base (24) bounding a load space (27), with a roof (25) bounding the load space (27) and with a device (20) for transferring a wall (21; 21.1, 21.2) of the transport container (22) from a closed setting (28) to an open setting (29, 30) above the roof (25) and conversely, comprising the following features:
- the transport container (22) comprises at least one guide (31; 31.1, 31.2), which extends above the load space (27), for the wall (21; 21.1, 21.2);
- the first guide (31; 31.1, 31.2) is articulated to the transport container (22) to be pivotable in the roof region of the transport container (22) about a first pivot axis (34);
- the wall (21; 21.1, 21.2) is articulated in the region of its end (35.1), which is upper in the closed setting (28), to the first guide (31; 31.1, 31.2) to be pivotable about a second axis (36) of the first guide (31; 31.1, 31.2), the second pivot axis being arranged at a spacing from the first pivot axis (34) of the first guide (31; 31.1, 31.2);
- the wall (21; 21.1, 21.2) is articulated to the transport container (22) only by way of the first guide (31; 31.1, 31.2) or only by way of several first guides (31; 31.1, 31.2), of that kind, which are arranged at a spacing from one another and the first pivot axes (34; 34') of which are arranged approximately coaxially; and
- the wall (21; 21.1, 21.2) when pivoted from its closed setting (28) to its open setting (29, 30) and in a given case also conversely bears against a support surface (37), which is present in the roof region of the transport container (22), with simultaneous displacement relative thereto,
**characterised by** the following features:
- the wall (21; 21.1, 21.2) is pivotable up with the help of a linear drive (40) from its closed setting (28) to the open setting (29, 30) above the roof (25) and is transferrable with the help of the linear drive (40) from the open setting (29, 30) to a closed setting (28);
- the linear drive (40) comprises a support part (42) and an actuating part (43), which are linearly movable relative to one another;
- the support part (42) of the linear drive (40) is articulated to the transport container (22) to be pivotable in the roof region of the transport container (22) about a pivot axis (44);
- the actuating part (43) of the linear drive (40) is indirectly articulated to the first guide (31; 31.1, 31.2) at a spacing from the first pivot axis (34; 34') thereof so that the first guide (31; 31.1, 31.2) is pivotable with the help of the linear drive (40) about its first pivot axis (34);
- a second guide (52) is articulated to the actuating part (43) of the linear drive (40) to be pivotable about a first pivot axis (54);
- the second guide (52) is articulated to the first guide (31; 31.1, 31.2) at a spacing from the first pivot axis (34) thereof to be pivotable about a second pivot axis (55) arranged at a spacing from the first pivot axis (54) of the second guide;
- the linear drive (40) has at its actuating part (43) and/or the second guide (52) has a roller body and/or slide body (58) which when the wall (21; 21.1, 21.2) is pivoted with the help of the linear drive (40; 40.1, 40.2) from its closed setting (28) to its open setting (29, 30) and in a given case also conversely is or are moved along a control cam surface (61), which projects upwardly in the roof region of the transport container (22), of a supporting and guiding body (60); and
- the first guide (31; 31.1, 31.2) is supported during pivotation of the wall (21; 21.1, 21.2) from its closed setting (28) to its open setting (29, 30) and in a given case also conversely on the control cam surface (61) of the supporting and guiding body (60) by way of the roller body and/or side body (58).

2. Transport container according to claim 1, **characterised in that** the first guide (31; 31.1, 31.2) and/or the linear drive (40) is or are so coupled with a mechanism (45) and/or drive that the first guide (31; 31.1, 31.2) is pivotable with the help of the linear drive (40), which is articulated thereto, about its first pivot axis (34) through more than 150 degrees, preferably through more than 160 degrees, particularly through at least 170 to 180 degrees.

3. Transport container according to claim 1 or 2, **characterised in that** the first pivot axis (34) of the first guide (31; 31.1, 31.2) is arranged eccentrically with respect to the longitudinal axis (71) thereof.

4. Transport container according to at least one of claims 1 to 3, **characterised in that** the control cam surface (61) extends above the pivot axis (44) of the linear drive (40), preferably also to above the first pivot axis (34) of the first guide (31; 31.1, 31.2).

5. Transport container according to at least one of claims 1 to 4, **characterised in that** the control cam surface (61) is formed to be curved upwardly in a notional vertical plane perpendicular to the first pivot axis (34) of the first guide (31; 31.1, 31.2).

6. Transport container according to at least one of claims 1 to 5, **characterised in that** the supporting and guiding body (60) has an oblique plane (62) containing the control cam surface (61).

7. Transport container according to at least one of claims 1 to 6, **characterised in that** the supporting and guiding body (60) has in a notional vertical plane perpendicular to the first pivot axis (34) of the first guide (31; 31.1, 31.2) a cross-section (65) which is upwardly bounded by the control cam surface (61) and formed to U-shaped, V-shaped, C-shaped or L-shaped.

8. Transport container according to at least one of claims 1 to 7, **characterised in that** the supporting and guiding body (60) has in a notional vertical plane perpendicular to the first pivot axis (34) of the first guide (31; 31.1, 31.2) a bulge-shaped or trapezium-shaped cross-section (66) bounded upwardly at least in part by the control cam surface (61).

9. Transport container according to at least one of claims 1 to 8, **characterised in that** the roller body and/or slide body (58) during pivotation of the wall (21; 21.1, 21.2) is or are guided in or at a gate guide (90), which contains the control cam surface (61), of the supporting and guiding body (60) when the wall (21; 21.1, 21.2) is pivoted.

10. Transport container according to at least one of claims 1 to 9, **characterised in that** the spacing (68; 68.1, 68.2, 68.3) of a notional straight line (67; 67.1, 67.2, 67.3), which contains the first pivot axis (54) and the second pivot axis (55) of the second guide (52), in a notional plane, which is formed perpendicularly to these parallel pivot axes (54, 55), from the first pivot axis (34), which is formed parallel to these pivot axes (54, 55), of the first guide (31; 31.1, 31.2), with the exception of the maximum spacing (69) of the straight line (67; 67.1, 67.2, 67.3) from the first pivot axis (34) of the first guide (31; 31.1, 31.2) arising during pivotation of the wall (21; 21.1, 21.2) in the entire pivot range in which the roller body and/or slide body (58) bears or bear against the control cam surface (61), is always greater than half, preferably two thirds, particularly four-fifths, of the maximum spacing (69) of these spacings (68; 68.1, 68.2, 68.3).

11. Transport container according to at least one of claims 3 to 10, **characterised in that** the first pivot axis (34) of the first guide (31; 31.1, 31.2) is so arranged eccentrically with respect to the longitudinal axis (71) thereof that in the closed setting (28) of the wall (21; 21.1, 21.2) it is arranged below the longitudinal axis (71) of the first guide (31; 31.1, 31.2).

12. Transport container, for example vehicle body or box body, particularly a utility vehicle, with a base (24) bounding a load space (27), with a roof (25) bounding the load space (27) and with a device (20') for transferring a wall (21; 21.1, 21.2) of the transport container (22) from a closed setting (28) to an open setting (29, 30) above the roof (25) and conversely, comprising the following features:
- the transport container (22) comprises at least one guide (31'), which extends above the load space (27), for the wall (21; 21.1, 21.2);
- the first guide (31') is articulated to the transport container (22) to be pivotable in the roof region of the transport container (22) about a first pivot axis (34');
- the wall (21; 21.1, 21.2) is articulated in the region of its end (35.1), which is upper in the closed setting (28), to be pivotable about a second axis (36) of the first guide (31'), the second pivot axis being arranged at a spacing from the first pivot axis (34') of the first guide (31');
- the wall (21; 21.1, 21.2) is articulated to the transport container (22) only by way of the first guide (31') or only by way of several first guides (31') of that kind, which are arranged at a spacing from one another and the first pivot axes (34') of which are arranged approximately coaxially; and
- the wall (21; 21.1, 21.2) when pivoted from its closed setting (28) to its open setting (29, 30) and in a given case also conversely bears against a support surface (37), which is present in the roof region of the transport container (22), with simultaneous displacement relative thereto,
**characterised by** the following features:
- the wall (21; 21.1, 21.2) is pivotable up with the help of a linear drive (40) from its closed setting (28) to the open setting (29, 30) above the roof (25) and is transferrable with the help of the linear drive (40) from the open setting (29, 30) to a closed setting (28);
- the linear drive (40) comprises a support part (42) and an actuating part (43), which are linearly movable relative to one another;
- the support part (42) of the linear drive (40) is articulated to the transport container (22) to be pivotable in the roof region of the transport container (22) about a pivot axis (44);
- the actuating part (43) of the linear drive (40) is indirectly articulated to the first guide (31') at a spacing from the first pivot axis (34') thereof so that the first guide (31') is pivotable with the help of the linear drive (40) about its first pivot axis (34');
- a second guide (52') is articulated to the actuating part (43) of the linear drive (40) to be pivotable about a first pivot axis (54');
- the second guide (52') is articulated to the transport container (22) to be pivotable in the roof region of the transport container (22) about a further pivot axis (94);
- the further pivot axis (94) is arranged at a spacing from the first pivot axis (34') of the first guide (31');
- the second guide (52') is coupled with the first guide (31') by way of a joint (95) which enables not only pivotation, but also sliding of the second guide (52') relative to the first guide (31');
- the joint (95) comprises at least one roller body and/or slide body (96.1, 96.2) pivotable about a pivot axis (55') and a supporting and guiding body (60'), which has at least one guide surface (61', 61", 61"') and/or at least one control cam surface (61', 61", 61'"), for the at least one roller body and/or side body (96.1, 96.2);
- the first guide (31') is supported by way of the roller body and/or slide body (96.1, 96.2) on the at least one guide surface (61', 61", 61'") or on the at least one control cam surface (61', 61", 61"') when the wall (21; 21.1, 21.2) is pivoted from its closed setting (28) to its open setting (29, 30) and conversely; and
- either the supporting and guiding body (60') is formed by at least two mutually spaced-apart supporting and guiding elements (97.1, 97.2, 97.3) each having at least one guide surface (61', 61", 61'") for the at least one roller body and/or side body (96.1, 96.2) or
- the roller and/or slide body is guided during pivotation of the wall (21; 21.1, 21.2) in or at a gate guide, which contains the control cam surface, of the supporting and guiding body (60).

13. Transport container according to claim 12, **characterised in that** the first guide (31') and/or the linear drive (40) is or are so coupled with a mechanism (45') and/or drive that the first guide (31') is pivotable with the help of the linear drive (40), which is articulated thereto, about its first pivot axis (34') through more than 150 degrees, preferably through more than 160 degrees, particularly through at least 170 to 180 degrees.

14. Transport container according to claim 12 or 13, **characterised in that** the joint (95) has a pivot axis (55) arranged at a spacing from the first pivot axis (54') of the second guide (52') and also at a spacing from the further pivot axis (94) of the second guide (52').

15. Transport container according to any one of claims 12 to 14, **characterised in that** the roller body and/or slide body (96.1, 96.2) is or are fastened or articulated to the second guide (52') or forms or form a part of the second guide and that the supporting and guiding body (60') is fastened to the first guide (31') or forms a part of the first guide (31').

16. Transport container according to any one of claims 12 to 15, **characterised in that** the roller body and/or slide body is or are fastened or articulated to the first guide or forms or form a part of the first guide and that the supporting and guiding body is fastened to the second guide or forms a part of the second guide.

17. Transport container according to at least one of claims 12 to 16, **characterised in that** the at least one guide surface (61', 61", 61'") is formed to be substantially planar.

18. Transport container according to at least one of claims 12 to 17, **characterised in that** some or all or the guide surfaces (61', 61", 61'") are formed to be parallel to one another.

19. Transport container according to at least one of claims 12 to 18, **characterised in that** the first pivot axis (34') of the first guide (31') is so arranged eccentrically with respect to the longitudinal axis (71') thereof that it is arranged above the longitudinal axis (71') of the first guide (31') in the closed setting (28) of the wall (21; 21.1, 21.2).

20. Transport container according to at least one of the preceding claims, **characterised in that** the first pivot axis (34; 34') of the first guide (31; 31.1, 31.2; 31') is arranged above the pivot axis (44) of the linear drive (40).

21. Transport container according to at least one of the preceding claims, **characterised in that** the linear drive (40) is arranged substantially or completely below the first pivot axis (34; 34') of the first guide (31; 31.1, 31.2; 31') in the closed setting (28) of the wall (21; 21.1, 21.2).

22. Transport container according to at least one of the preceding claims, **characterised in that** the first pivot axis (34; 34') of the first guide (31; 31.2, 31.2; 31') and the second pivot axis (36) of the first guide (31; 31.2, 31.2; 31') are arranged at a mutual spacing (46) approximately corresponding with half the height (47) of the wall (21; 21.1, 21.2).

23. Transport container according to at least one of the preceding claims, **characterised in that** arranged in the roof region of the transport container (22), preferably in the region of its side edges (51), is a supporting and guiding element (38) which preferably has the support surface (37) - preferably a supporting and guiding roller (39) having the support surface (37) - and on which the wall (21; 21.1, 21.2) bears, preferably to be freely liftable, during pivotation from a closed setting (28) to an open setting (29, 30).

24. Transport container according to at least one of the preceding claims, **characterised in that** the linear drive (40) and/or the first guide (31; 31.1, 31.2; 31') is or are articulated at or on a roof girder (72) of the transport container (22).

25. Transport container according to at least one of the preceding claims, **characterised in that** the wall is articulated to the transport container by way of at least two of the first guides, wherein at least two of the first guides are connected together in rotationally fast manner by way of a torsionally stiff rod element, preferably a tube, the longitudinal axis of which is arranged coaxially with the first pivot axes of the first guide connected by way of the rod element.

26. Transport container according to at least one of the preceding claims, **characterised in that** the spacing (50), which determines a constructional height (50), between the parts, which project upwardly beyond the roof (25) in the closed setting of the wall (21; 21.1, 21.2), of a mechanism (45; 45'), which includes at least the first guide (31; 31.1, 31.2; 31') and the linear drive (40), in a given case also the second guide (52; 52'), the roller body and/or slide body (58; 95) and the supporting and guiding body (60; 60'), and the roof (25) bounding the load space (27) is smaller than 25 centimetres, preferably smaller than 20 centimetres, particularly equal to or smaller than approximately 16 centimetres.

27. Transport container according to at least one of the preceding claims, **characterised in that** the second pivot axis (36) of the first guide (31; 31.1, 31.2; 31'), about which the wall (21; 21.1, 21.2) articulated to the first guide (31; 31.1, 31.2; 31') is pivotable, has a spacing (75) from the surface (73), which faces outwardly in the closed setting (28) of the wall (21; 21.1, 21.2), of the wall (21; 21.1, 21.2) or from the centre of gravity (74), which is formed in the closed setting (28) of the wall (21; 21.1, 21.2), of the wall (21; 21.1, 21.2) considered in a plane perpendicular to the second pivot axis (36) of the first guide (31; 31.1, 31.2; 31').

28. Transport container according to at least one of the preceding claims, **characterised in that** arranged between the first guide (31; 31.1, 31.2; 31') and the wall (21; 21.1, 21.2) is a spring (76), which in a pivot range in which the wall (21; 21.1, 21.2) is disposed in the region of its closed setting (28) is supported at the first guide (31; 31.1, 31.2; 31') and at the wall (21; 21.1, 21.2) and the spring forces of which load the wall (21;, 21.1, 21.2) in the direction of its closed setting (28).

29. Transport container according to claim 28, **characterised in that** the spring (76) is constructed as a compression spring.

30. Transport container according to claim 28 or 29, **characterised in that** the spring (76) is fixedly connected only with the first guide (31; 31.1, 31.2; 31') so that it can, in an open setting (29, 30) of the wall (21; 21.1, 21.2), lift off from this.

31. Transport container according to claim 28 or 29, **characterised in that** the spring is fixedly connected only with the wall so that it can, in an open setting of the wall, lift off from the first guide.

32. Transport container (22) according to at least one of the preceding claims, with at least one first, preferably single-leaf, particularly integral, wall (21.1) and with at least one second, preferably single-leaf, particularly integral, wall (21.2), which are disposed opposite in their respective closed settings (28) and which each are transferrable with the help of one of the devices (20; 20') from a respective closed setting (28) to a respective open setting (29, 30) and in a given case also conversely.

33. Transport container according to claim 32, **characterised in that** the first wall (21.1) or the second wall or both walls has or have in the region of the end (35.1) thereof, which is upper in its or their closed setting (28), a support surface (77) on which the second wall (21.2) or the other wall during pivotation from the closed setting (28) thereof to the open setting (29, 30) thereof, in a given case also conversely, can rest or does rest with simultaneous displacement relative thereto, preferably to be able to be freely lifted.

34. Transport container according to claim 33, **characterised in that** the first wall (21.1) or the second wall or both walls has or have in the region of the end (35.1) thereof, which is upper in the closed setting (28) thereof, a supporting and guiding element (78), which has the support surface (77) - preferably a supporting and guiding roller (79) having the support surface (77) - and on which the second wall (21.2) or the other wall during pivotation thereof can rest or does rest, preferably to be able to be freely lifted.

## Revendications

1. Caisson de transport, tel qu'une structure carrossée d'un véhicule ou une structure de benne, en particulier d'un véhicule utilitaire, comportant un fond (24), délimitant un compartiment de chargement (27), un toit (25), délimitant le compartiment de chargement (27), et un dispositif (20) destiné à amener une paroi (21 ; 21.1, 21.2) du caisson de transport (22) depuis une position de fermeture (28) dans une position d'ouverture (29, 30) au-dessus du toit (25), et inversement, comportant les caractéristiques suivantes :
- le caisson de transport (22) comporte au moins un premier bras articulé (31 ; 31.1, 31.2) pour la paroi (21 ; 21.1, 21.2), lequel s'étend au-dessus du compartiment de chargement (27) ;
- le premier bras articulé (31 ; 31.1, 31.2) est articulé, dans la zone de toit du caisson de transport (22), contre ce dernier, de manière à pouvoir pivoter autour d'un premier axe de pivotement (34) ;
- la paroi (21 ; 21.1, 21.2), dans la zone de son extrémité supérieure (35.1) dans la position de fermeture (28), est articulée contre le premier bras articulé (31 ; 31.1, 31.2) de manière à pouvoir pivoter autour d'un deuxième axe de pivotement (36) de ce dernier, lequel est situé à distance du premier axe de pivotement (34) du premier bras articulé (31 ; 31.1, 31.2) ;
- la paroi (21 ; 21.1, 21.2) est articulée contre le caisson de transport (22) uniquement par l'intermédiaire du premier bras articulé (31 ; 31.1, 31.2) ou uniquement par l'intermédiaire de plusieurs premiers bras articulés (31 ; 31.1, 31.2) de ce type, lesquels sont disposés à distance les uns des autres et dont les premiers axes de pivotement (34 ; 34') sont disposés sensiblement coaxialement ;
- la paroi (21 ; 21.1, 21.2), pendant son pivotement depuis sa position de fermeture (28) dans sa position d'ouverture (29, 30), le cas échéant aussi inversement, est en appui sur une surface d'appui (37) tout en pouvant se déplacer par rapport à celle-ci, qui est prévue dans la zone de toit du caisson de transport (22) ;
**caractérisé par** les caractéristiques suivantes :
- la paroi (21 ; 21.1, 21.2) est apte à pivoter au moyen d'un système d'entraînement linéaire (40) depuis sa position de fermeture (28) dans la position d'ouverture (29, 30) vers le haut au-dessus du toit (25) et, au moyen du système d'entraînement linéaire (40), elle peut être amenée de la position d'ouverture (29, 30) dans une position de fermeture (28) ;
- le système d'entraînement linéaire (40) comporte une partie de support (42) et une partie d'actionnement (43), qui peuvent être déplacées linéairement l'une par rapport à l'autre ;
- la partie de support (42) du système d'entraînement linéaire (40) est articulée, dans la zone de toit du caisson de transport (22), contre ce dernier, de manière à pouvoir pivoter autour d'un axe de pivotement (44) ;
- la partie d'actionnement (43) du système d'entraînement linéaire (40) est articulée indirectement sur le premier bras articulé (31 ; 31.1, 31.2) à distance du premier axe de pivotement (34 ; 34') de celui-ci, de telle sorte que le premier bras articulé (31 ; 31.1, 31.2) est apte à pivoter au moyen du système d'entraînement linéaire (40) autour de son premier axe de pivotement (34) ;
- un deuxième bras articulé (52) est articulé sur la partie d'actionnement (43) du système d'entraînement linéaire (40), de manière à pouvoir pivoter autour d'un premier axe de pivotement (54) ;
- le deuxième bras articulé (52) est articulé contre le premier bras articulé (31 ; 31.1, 31.2), à distance du premier axe de pivotement (34) de celui-ci, de manière à pouvoir pivoter autour d'un deuxième axe de pivotement (55) situé à distance de son premier axe de pivotement (54) ;
- le système d'entraînement linéaire (40), au niveau de sa partie d'actionnement (43), et/ou le deuxième bras articulé (52) comporte ou comportent un corps de roulement et/ou de glissement (58) qui, pendant le pivotement de la paroi (21 ; 21.1, 21.2) au moyen du système d'entraînement linéaire (40 ; 40.1, 40.2) depuis sa position de fermeture (28) dans sa position d'ouverture (29, 30), le cas échéant aussi inversement, est déplacé le long d'une surface courbe de commande (61) d'un corps d'appui et de guidage (60), laquelle s'avance vers le haut dans la zone de toit du caisson de transport (22) ;
- le premier bras articulé (31 ; 31.1, 31.2), pendant le pivotement de la paroi (21 ; 21.1, 21.2) depuis sa position de fermeture (28) dans sa position d'ouverture (29, 30), le cas échéant aussi inversement, prend appui, par l'intermédiaire du corps de roulement et/ou de glissement (58), contre la surface courbe de commande (61) du corps d'appui et de guidage (60).

2. Caisson de transport selon la revendication 1, **caractérisé en ce que** le premier bras articulé (31 ; 31.1, 31.2) et/ou le système d'entraînement linéaire (40) sont couplés à un mécanisme (45) et/ou un système d'entraînement, de telle sorte que le premier bras articulé (31 ; 31.1, 31.2), au moyen du système d'entraînement linéaire (40) articulé contre celui-ci, est apte à pivoter autour de son premier axe de pivotement (34) sur plus de 150 degrés, de préférence sur plus de 160 degrés, en particulier sur au moins 170 à 180 degrés.

3. Caisson de transport selon la revendication 1 ou 2, **caractérisé en ce que** le premier axe de pivotement (34) du premier bras articulé (31 ; 31.1, 31.2) est disposé en étant excentré par rapport à l'axe longitudinal (71) de ce dernier.

4. Caisson de transport selon au moins l'une des revendications 1 à 3, **caractérisé en ce que** la surface courbe de commande (61) s'étend jusqu'au-dessus de l'axe de pivotement (44) du système d'entraînement linéaire (40), de préférence jusqu'au-dessus du premier axe de pivotement (34) du premier bras articulé (31 ; 31.1, 31.2).

5. Caisson de transport selon au moins l'une des revendications 1 à 4, **caractérisé en ce que** la surface courbe de commande (61) est bombée vers le haut dans un plan vertical imaginaire perpendiculaire au premier axe de pivotement (34) du premier bras articulé (31 ; 31.1, 31.2).

6. Caisson de transport selon au moins l'une des revendications 1 à 5, **caractérisé en ce que** le corps d'appui et de guidage (60) comporte un plan (62) incliné contenant la surface courbe de commande (61).

7. Caisson de transport selon au moins l'une des revendications 1 à 6, **caractérisé en ce que** le corps d'appui et de guidage (60), dans un plan vertical imaginaire perpendiculaire au premier axe de pivotement (34) du premier bras articulé (31 ; 31.1, 31.2), possède une section (65), configurée en forme de U, V, C ou L et délimitée vers le haut par la surface courbe de commande (61).

8. Caisson de transport selon au moins l'une des revendications 1 à 7, **caractérisé en ce que** le corps d'appui et de guidage (60), dans un plan vertical imaginaire perpendiculaire au premier axe de pivotement (34) du premier bras articulé (31 ; 31.1, 31.2), possède une section (66) bombée ou trapézoïdale, délimitée au moins en partie vers le haut par la surface courbe de commande (61).

9. Caisson de transport selon au moins l'une des revendications 1 à 8, **caractérisé en ce que**, pendant le pivotement de la paroi (21 ; 21.1, 21.2), le corps de roulement et/ou de glissement (58) est guidé dans ou sur une coulisse de guidage (90) du corps d'appui et de guidage (60), laquelle contient la surface courbe de commande (61).

10. Caisson de transport selon au moins l'une des revendications 1 à 9, **caractérisé en ce que** la distance (68 ; 68.1, 68.2, 68.3) entre une droite (67 ; 67.1, 67.2, 67.3) imaginaire, contenant le premier axe de pivotement (54) et le deuxième axe de pivotement (55) du deuxième bras articulé (52), dans un plan imaginaire réalisé perpendiculairement à ces axes de pivotement (54, 55) parallèles, et le premier axe de pivotement (34), réalisé parallèlement à ces axes de pivotement (54, 55), du premier bras articulé (31 ; 31.1, 31.2), à l'exception de la distance (69) maximale, se produisant pendant le pivotement de la paroi (21 ; 21.1, 21.2) dans la totalité de la zone de pivotement, dans laquelle le corps de roulement et/ou de glissement (58) est en appui contre la surface courbe de commande (61), entre les droites (67 ; 67.1, 67.2, 67.3) et le premier axe de pivotement (34) du premier bras articulé (31 ; 31.1, 31.2), est toujours supérieure à la moitié, de préférence aux deux tiers, en particulier aux quatre cinquièmes de la distance maximale (69) des distances (68 ; 68.1, 68.2, 68.3).

11. Caisson de transport selon au moins l'une des revendications 3 à 10, **caractérisé en ce que** le premier axe de pivotement (34) du premier bras articulé (31 ; 31.1, 31.2) est disposé en étant excentré par rapport à l'axe longitudinal (71) de ce dernier, de telle sorte que, dans la position de fermeture (28) de la paroi (21 ; 21.1, 21.2), il est disposé en dessous de l'axe longitudinal (71) du premier bras articulé (31 ; 31.1, 31.2).

12. Caisson de transport, tel qu'une structure carrossée d'un véhicule ou une structure de benne, en particulier d'un véhicule utilitaire, comportant un fond (24), délimitant un compartiment de chargement (27), un toit (25), délimitant le compartiment de chargement (27), et un dispositif (20') destiné à amener une paroi (21 ; 21.1, 21.2) du caisson de transport (22) depuis une position de fermeture (28) dans une position d'ouverture (29, 30) au-dessus du toit (25), et inversement, comportant les caractéristiques suivantes :
- le caisson de transport (22) comporte au moins un premier bras articulé (31') pour la paroi (21 ; 21.1, 21.2), lequel s'étend au-dessus du compartiment de chargement (27) ;
- le premier bras articulé (31 ; 31.1, 31.2) est articulé, dans la zone de toit du caisson de transport (22), contre ce dernier, de manière à pouvoir pivoter autour d'un premier axe de pivotement (34) ;
- la paroi (21 ; 21.1, 21.2), dans la zone de son extrémité supérieure (35.1) dans la position de fermeture (28), est articulée contre le premier bras articulé (31') de manière à pouvoir pivoter autour d'un deuxième axe de pivotement (36) de ce dernier, lequel est situé à distance du premier axe de pivotement (34') du premier bras articulé (31') ;
- la paroi (21 ; 21.1, 21.2) est articulée contre le caisson de transport (22) uniquement par l'intermédiaire du premier bras articulé (31') ou uniquement par l'intermédiaire de plusieurs premiers bras articulés (31') de ce type, lesquels sont disposés à distance les uns des autres et dont les premiers axes de pivotement (34') sont disposés sensiblement coaxialement ;
- la paroi (21 ; 21.1, 21.2), pendant son pivotement depuis sa position de fermeture (28) dans sa position d'ouverture (29, 30), le cas échéant aussi inversement, est en appui sur une surface d'appui (37) tout en pouvant se déplacer par rapport à celle-ci, qui est prévue dans la zone de toit du caisson de transport (22) ;
**caractérisé par** les caractéristiques suivantes :
- la paroi (21 ; 21.1, 21.2) est apte à pivoter au moyen d'un système d'entraînement linéaire (40) depuis sa position de fermeture (28) dans la position d'ouverture (29, 30) vers le haut au-dessus du toit (25) et, au moyen du système d'entraînement linéaire (40), elle peut être amenée de la position d'ouverture (29, 30) dans une position de fermeture (28) ;
- le système d'entraînement linéaire (40) comporte une partie de support (42) et une partie d'actionnement (43), qui peuvent être déplacées linéairement l'une par rapport à l'autre ;
- la partie de support (42) du système d'entraînement linéaire (40) est articulée, dans la zone de toit du caisson de transport (22), contre ce dernier, de manière à pouvoir pivoter autour d'un axe de pivotement (44) ;
- la partie d'actionnement (43) du système d'entraînement linéaire (40) est articulée indirectement sur le premier bras articulé (31') à distance du premier axe de pivotement (34') de celui-ci, de telle sorte que le premier bras articulé (31') est apte à pivoter au moyen du système d'entraînement linéaire (40) autour de son premier axe de pivotement (34') ;
- un deuxième bras articulé (52') est articulé sur la partie d'actionnement (43) du système d'entraînement linéaire (40), de manière à pouvoir pivoter autour d'un premier axe de pivotement (54') ;
- le deuxième bras articulé (52') est articulé, dans la zone de toit du caisson de transport (22), contre ce dernier, de manière à pouvoir pivoter autour d'un autre axe de pivotement (94) ;
- l'autre axe de pivotement (94) est situé à distance du premier axe de pivotement (34') du premier bras articulé (31') ;
- le deuxième bras articulé (52') est couplé au premier bras articulé (31') par l'intermédiaire d'une articulation (95) qui permet un pivotement, de même qu'un mouvement de translation du deuxième bras articulé (52') par rapport au premier bras articulé (31') ;
- l'articulation (95) comporte au moins un corps de roulement et/ou de glissement (96.1, 96.2), apte à pivoter autour d'un axe de pivotement (55'), et un corps d'appui et de guidage (60') comportant au moins une surface de guidage (61', 61", 61"') et/ou au moins une surface courbe de commande (61', 61", 61"') pour ledit au moins un corps de roulement et/ou de glissement (96.1, 96.2) ;
- le premier bras articulé (31'), pendant le pivotement de la paroi (21 ; 21.1, 21.2) depuis sa position de fermeture (28) dans sa position d'ouverture (29, 30), et inversement, prend appui, par l'intermédiaire du corps de roulement et/ou de glissement (96.1, 96.2), contre ladite au moins une surface de guidage (61', 61", 61"') et/ou ladite au moins une surface courbe de commande (61', 61", 61"') ;
- soit le corps d'appui et de guidage (60') est réalisé avec au moins deux éléments d'appui et de guidage (97.1, 97.2, 97.3), qui sont situés à distance l'un de l'autre et qui comportent chacun au moins une surface de guidage (61', 61", 61"') pour ledit au moins un corps de roulement et/ou de glissement (96.1, 96.2),
- soit le corps de roulement et/ou de glissement, pendant le pivotement de la paroi (21 ; 21.1, 21.2), est guidé dans ou sur une coulisse de guidage du corps d'appui et de guidage (60), laquelle contient la surface courbe de commande.

13. Caisson de transport selon la revendication 12, **caractérisé en ce que** le premier bras articulé (31') et/ou le système d'entraînement linéaire (40) sont couplés à un mécanisme (45') et/ou un système d'entraînement, de telle sorte que le premier bras articulé (31'), au moyen du système d'entraînement linéaire (40) articulé contre celui-ci, est apte à pivoter autour de son premier axe de pivotement (34') sur plus de 150 degrés, de préférence sur plus de 160 degrés, en particulier sur au moins 170 à 180 degrés.

14. Caisson de transport selon la revendication 12 ou 13, **caractérisé en ce que** l'articulation (95) comporte un axe de pivotement (55'), qui est situé à distance du premier axe de pivotement (54') du deuxième bras articulé (52') et également à distance de l'autre axe de pivotement (94) du deuxième bras articulé (52').

15. Caisson de transport selon l'une quelconque des revendications 12 à 14, **caractérisé en ce que** le corps de roulement et/ou de glissement (96.1, 96.2) est fixé, voire articulé contre le deuxième bras articulé (52') ou forme une partie du deuxième bras articulé, et **en ce que** le corps d'appui et de guidage (60') est fixé contre le premier bras articulé (31') ou forme une partie du premier bras articulé (31').

16. Caisson de transport selon l'une quelconque des revendications 12 à 15, **caractérisé en ce que** le corps de roulement et/ou de glissement est fixé, voire articulé contre le premier bras articulé ou forme une partie du premier bras articulé, et **en ce que** le corps d'appui et de guidage est fixé contre le deuxième bras articulé ou forme une partie du deuxième bras articulé.

17. Caisson de transport selon au moins l'une des revendications 12 à 16, **caractérisé en ce que** ladite au moins une surface de guidage (61', 61", 61"') est réalisée de manière sensiblement plane.

18. Caisson de transport selon au moins l'une des revendications 12 à 17, **caractérisé en ce que** plusieurs surfaces de guidage (61', 61", 61"') sont réalisées parallèlement entre elles.

19. Caisson de transport selon au moins l'une des revendications 12 à 18, **caractérisé en ce que** le premier axe de pivotement (34') du premier bras articulé (31') est disposé en étant excentré par rapport à l'axe longitudinal (71') de ce dernier, de telle sorte que, dans la position de fermeture (28) de la paroi (21 ; 21.1, 21.2), il est disposé au-dessus de l'axe longitudinal (71') du premier bras articulé (31').

20. Caisson de transport selon au moins l'une des revendications précédentes, **caractérisé en ce que** le premier axe de pivotement (34 ; 34') du premier bras articulé (31 ; 31.1, 31.2 ; 31') est disposé au-dessus de l'axe de pivotement (44) du système d'entraînement linéaire (40).

21. Caisson de transport selon au moins l'une des revendications précédentes, **caractérisé en ce que**, dans la position de fermeture (28) de la paroi (21 ; 21.1, 21.2), le système d'entraînement linéaire (40) est disposé sensiblement ou totalement au-dessous du premier axe de pivotement (34 ; 34') du premier bras articulé (31 ; 31.1, 31.2 ; 31').

22. Caisson de transport selon au moins l'une des revendications précédentes, **caractérisé en ce que** le premier axe de pivotement (34 ; 34') du premier bras articulé (31 ; 31.1, 31.2 ; 31') et le deuxième axe de pivotement (36) du premier bras articulé (31 ; 31.1, 31.2 ; 31') sont situés à une distance (46) l'un de l'autre, qui correspond à peu près à la moitié de la hauteur (47) de la paroi (21 ; 21.1, 21.2).

23. Caisson de transport selon au moins l'une des revendications précédentes, **caractérisé en ce que** dans la zone de toit du caisson de transport (22), de préférence dans la zone de l'un de ses bords latéraux (51), est disposé un élément d'appui et de guidage (38) muni de la surface d'appui (37), de préférence un galet d'appui et de guidage (39) muni de la surface d'appui (37), sur lequel la paroi (21 ; 21.1, 21.2) est en appui, de préférence de manière librement relevable, pendant le pivotement depuis une position de fermeture (28) dans une position d'ouverture (29, 30).

24. Caisson de transport selon au moins l'une des revendications précédentes, **caractérisé en ce que** le système d'entraînement linéaire (40) et/ou le premier bras articulé (31 ; 31.1, 31.2 ; 31') est ou sont articulé (s) contre ou sur un support de toit (72) du caisson de transport (22).

25. Caisson de transport selon au moins l'une des revendications précédentes, **caractérisé en ce que** la paroi est articulée contre le caisson de transport par l'intermédiaire d'au moins deux des premiers bras articulés, sachant qu'au moins deux des premiers bras articulés sont assemblés l'un à l'autre de manière immobile en rotation par l'intermédiaire d'une barre résistant à la torsion, de préférence un tube, dont l'axe longitudinal est disposé coaxialement aux premiers axes de pivotement des premiers bras articulés assemblés par l'intermédiaire de la barre.

26. Caisson de transport selon au moins l'une des revendications précédentes, **caractérisé en ce que** la distance (50), définissant une hauteur d'encombrement (50), entre les parties, s'avançant vers le haut au-delà du toit (25) dans la position de fermeture de la paroi (21 ; 21.1, 21.2), d'un mécanisme (45 ; 45') contenant au moins le premier bras articulé (31 ; 31.1, 31.2 ; 31') et le système d'entraînement linéaire (40), le cas échéant aussi le deuxième bras articulé (52 ; 52'), le corps de roulement et/ou de glissement (58 ; 95) et le corps d'appui et de guidage (60 ; 60'), et le toit (25) délimitant le compartiment de chargement (27), est inférieure à 25 cm, de préférence inférieure à 20 cm, en particulier égale ou inférieure à 16 cm environ.

27. Caisson de transport selon au moins l'une des revendication précédentes, **caractérisé en ce que** le deuxième axe de pivotement (36) du premier bras articulé (31 ; 31.1, 31.2 ; 31'), autour duquel peut pivoter la paroi (21 ; 21.1, 21.2) articulée contre le premier bras articulé (31 ; 31.1, 31.2 ; 31'), est situé, par référence à un plan perpendiculaire au deuxième axe de pivotement (36) du premier bras articulé (31 ; 31.1, 31.2 ; 31'), à une distance (75) de la surface (73) de la paroi (21 ; 21.1, 21.2), laquelle est orientée vers l'extérieur dans la position de fermeture (28) de la paroi (21 ; 21.1, 21.2), ou du centre de gravité (74) de la paroi (21 ; 21.1, 21.2), réalisé dans la position de fermeture (28) de la paroi (21 ; 21.1, 21.2).

28. Caisson de transport selon au moins l'une des revendications précédentes, **caractérisé en ce qu'**entre le premier bras articulé (31 ; 31.1, 31.2 ; 31') et la paroi (21 ; 21.1, 21.2), est disposé un ressort (76) qui, dans une zone de pivotement dans laquelle la paroi (21 ; 21.1, 21.2) se situe dans la zone de sa position de fermeture (28), prend appui sur le premier bras articulé (31 ; 31.1, 31.2; 31') et sur la paroi (21 ; 21.1, 21.2), et dont les forces de ressort sollicitent la paroi (21 ; 21.1, 21.2) vers sa position de fermeture (28).

29. Caisson de transport selon la revendication 28, **caractérisé en ce que** le ressort (76) est réalisé sous la forme d'un ressort de compression.

30. Caisson de transport selon la revendication 28 ou 29, **caractérisé en ce que** le ressort (76) est relié de manière fixe uniquement avec le premier bras articulé (31 ; 31.1, 31.2 ; 31'), de telle sorte que, dans une position d'ouverture (29, 30) de la paroi (21 ; 21.1, 21.2), il peut être détaché de celle-ci.

31. Caisson de transport selon la revendication 28 ou 29, **caractérisé en ce que** le ressort est assemblé fermement uniquement avec la paroi, de telle sorte qu'il peut être détaché du premier bras articulé dans une position d'ouverture de la paroi.

32. Caisson de transport (22) selon au moins l'une des revendications précédentes, comportant au moins une première paroi (21.1), de préférence en un seul vantail, en particulier d'un seul tenant, et comportant au moins une deuxième paroi (21.2) de préférence en un seul vantail, en particulier d'un seul tenant, lesquelles sont situées face à face dans leurs positions de fermeture (28) respectives et lesquelles peuvent être amenées chacune, au moyen de l'un des dispositifs (20 ; 20'), depuis une position de fermeture (28) dans une position d'ouverture (29, 30), le cas échéant aussi inversement.

33. Caisson de transport selon la revendication 32, **caractérisé en ce que** la première paroi (21.1) ou la deuxième paroi ou les deux parois, dans la zone de leur extrémité supérieure (35.1) dans leur position de fermeture (28), comporte ou comportent une surface d'appui (77), sur laquelle la deuxième paroi (21.2) ou l'autre paroi, pendant le pivotement de sa position de fermeture (28) dans sa position d'ouverture (29, 30), le cas échéant aussi inversement, peut être en appui ou est en appui, de préférence de manière librement relevable, tout en pouvant se déplacer par rapport à ladite surface d'appui.

34. Caisson de transport selon la revendication 33, **caractérisé en ce que** la première paroi (21.1) ou la deuxième paroi ou les deux parois, dans la zone de leur extrémité supérieure (35.1) dans leur position de fermeture (28), comporte ou comportent un élément d'appui et de guidage (78) muni de la surface d'appui (77), de préférence un galet d'appui et de guidage (79) muni de la surface d'appui (77), sur lequel la deuxième paroi (21.2) ou l'autre paroi, lors de son pivotement, peut être en appui ou est en appui, de préférence de manière librement relevable.
